(19) **Europäisches Patentamt**
**European Patent Office**
**Office européen des brevets**

(11) **EP 3 781 406 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **19726557.2**

(22) Anmeldetag: **16.04.2019**

(51) Internationale Patentklassifikation (IPC):
**B41J 3/407** (2006.01)    **G06K 15/10** (2006.01)
**B41J 2/21** (2006.01)    **B25J 11/00** (2006.01)
**B05B 13/04** (2006.01)    **B05D 1/26** (2006.01)
**B05D 5/06** (2006.01)

(52) Gemeinsame Patentklassifikation (CPC):
**B41J 3/4073; B05B 13/0452; B41J 2/2132;**
**G06K 15/107;** B05D 1/26; B05D 5/06

(86) Internationale Anmeldenummer:
**PCT/DE2019/000105**

(87) Internationale Veröffentlichungsnummer:
**WO 2019/201367 (24.10.2019 Gazette 2019/43)**

(54) **DROP-ON-DEMAND - BESCHICHTUNG VON OBERFLÄCHEN**

DROP-ON-DEMAND COATING OF SURFACES

REVÊTEMENT DE SURFACES PAR GOUTTE À LA DEMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2018 DE 102018003096**

(43) Veröffentlichungstag der Anmeldung:
**24.02.2021 Patentblatt 2021/08**

(73) Patentinhaber: **EXEL Industries S.A.**
**51200 Epernay (FR)**

(72) Erfinder: **BÜSTGENS, Burkhard**
**79194 Gundelfingen (DE)**

(74) Vertreter: **Keenway Patentanwälte Neumann Heine Taruttis**
**PartG mbB**
**Postfach 10 33 63**
**40024 Düsseldorf (DE)**

(56) Entgegenhaltungen:
**EP-A1- 1 839 884        EP-A1- 3 208 746**
**EP-A1- 3 213 823        EP-A2- 2 208 541**
**EP-A2- 2 567 822        WO-A1-2013/178418**
**WO-A1-2017/121643    WO-A1-2020/048854**
**JP-A- 2008 191 903    JP-A- 2016 077 971**
**JP-A- 2017 018 884    JP-A- 2017 192 932**
**US-A1- 2001 019 340    US-A1- 2009 167 817**
**US-A1- 2014 132 673    US-A1- 2016 052 312**
**US-B1- 9 452 616**

EP 3 781 406 B1

**Beschreibung**

Die vorliegende Erfindung betrifft ein Verfahren zur Applikation eines Beschichtungsmusters und eine Vorrichtung zur Erzeugung einer Beschichtung auf einer zwei- oder dreidimensionalen Oberfläche eines Objektes.

Die Erfindung liegt im technischen Gebiet der kontaktfreien Beschichtung von ebenen (2D) oder gekrümmten (3D) Oberflächen 2 von Objekten 1, insbesondere von Industrieerzeugnissen, Fahrzeugen wie Automobile, Flugzeuge Schiffe oder Züge, oder Fahrzeugteilen, mithilfe von flüssigen Beschichtungsmitteln wie Farben, Lacken, Tinten, Dicht- oder Klebstoffen unter Verwendung von Tropfen- oder Strahl-basierten Applikationsköpfen (im Folgenden Beschichtungskopf), welche durch Beschichtungsroboter, welche hier allgemein stehen für mechanische, automatisierte kartesische und/oder polare Bewegungsapparate, durch mobile Roboter oder durch Industrie-Roboter, beispielsweise mit 6 Bewegungsachsen oder Kombinationen aus diesen, also mit beliebig gestalteten programmierbaren Bewegungsautomaten, über die Fläche geführt werden. Beschichtungsköpfe im Sinne dieser Erfindung sollen jede Art von Fluid-Applikatoren sein, aus denen durch mehrere oder eine Vielzahl von Düsen Beschichtungsmittel als diskrete Tropfen, Tropfenwolken oder Strahlen ausgestoßen wird, welche sich frei fliegend auf die Oberfläche 2 niederschlagen. Die Mehr- bzw. Vielkanaligkeit ist Grundvoraussetzung für einen produktiven Beschichtungsprozess mit hoher Flächen-Beschichtungsrate. Als Beschichtungsköpfe werden überwiegend Vielkanal- Drop-on-Demand (DOD) - Köpfe verstanden, welche beispielsweise eine Druck-beaufschlagte Flüssigkeit mittels schnell schaltender Ventile ausstoßen oder nach einem anderen Arbeitsprinzip arbeiten. Für spezifische Anwendungen kann auch ein üblicher Tintenstrahlkopf als Beschichtungskopf verstanden werden, welcher mittels Piezo- oder Heizelementen einen transienten Druck aufbaut, um eine Tinte auszustoßen. Ein Verfahren zum Tintenstrahldruck ist beispielsweise aus der EP 3 208 746 A1 bekannt. Um eine hohe Beschichtungsrate zu erhalten, ist eine möglichst große Anzahl von Druckdüsen in einem Beschichtungskopf notwendig. Dennoch ist meist die Applikationsbreite eines Beschichtungskopfes kleiner als die Breite des Beschichtungsbereichs 3, daher wird das Beschichtungsmittel üblicherweise in mehreren seitlich aneinander anknüpfenden Beschichtungsbahnen 6 appliziert. Beschichtungsbereich 3 bezeichnet hier die Geometrie einer Beschichtung bzw. ein Beschichtungsmuster auf einer Oberfläche 2. Ein Beschichtungsbereich 3 wird geometrisch im Wesentlichen durch dessen Randkonturen 4 definiert.

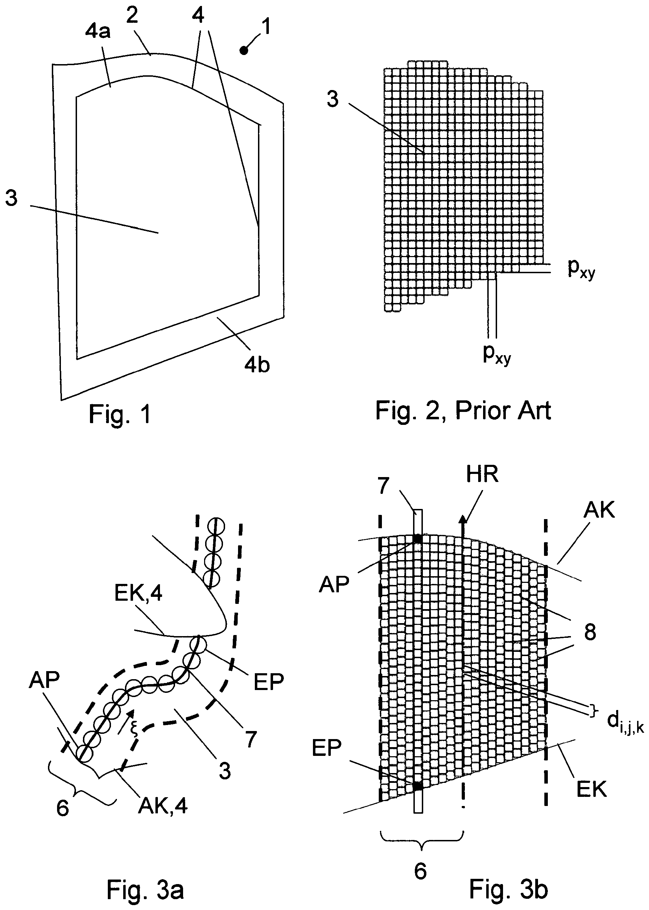

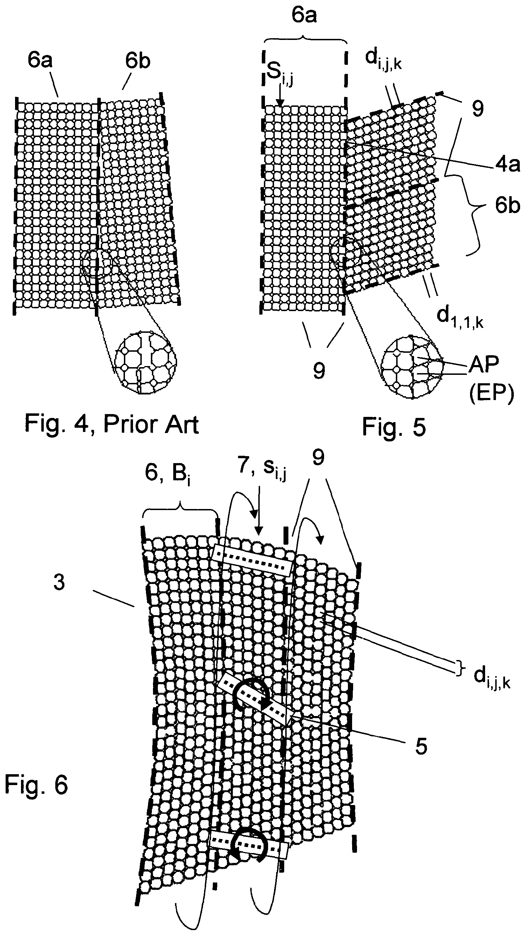

Insbesondere bei der Beschichtung von Oberflächen mit viskosen Beschichtungsmitteln besteht aufgrund der physikalisch bedingten Tropfengrößen im Nanoliterbereich das Problem, dass nur eine geringe Druckmuster-Auflösung erreicht werden kann im Vergleich zum grafischen Inkjet-Druck. Dies führt bei Verwendung der heute üblichen orthogonalen Rastertechnik - die Beschichtungspunkte sind in einem starren x-y Raster angeordnet - u.U. zu einer stark sichtbaren Stufenbildung an Beschichtungs-Rändern, siehe beispielsweise Fig. 2 (Prior Art). Die Stufenbildung ist dann besonders störend, wenn ein Rand im Bezug zum Raster im Bereich von +/- 5° um die Senkrechte oder waagerechte eines solchen Rasters liegt, siehe Fig. 4a (Prior Art), wobei die exakte senkrechte und waagerechte davon ausgeschlossen ist.

Diese kritischen Winkel treten vermehrt auch dann auf, wenn der Flächenbereich 1, der den Beschichtungsbereich 3 enthält, eine Flächenkrümmung (konvex oder konkav) aufweist, wie dies bei den oben genannten Anwendungsgebieten der Fall ist. Bei einer 2-dimensionalen Flächenkrümmung erscheint beispielsweise eine Beschichtungsbahn 6 aus der Perspektive der nächstgelegenen Beschichtungsbahn stets konvex gekrümmt, sodass für ein nahtloses Anknüpfen diese einen konvex gekrümmten Rand 9 aufweisen muss. Da die Düsenreihen in Beschichtungsköpfen starr sind, die einzelnen Düsen also unterschiedliche Abstände und Ausrichtungen im Bezug zu einer 3D-Fläche haben, nehmen mit kleiner werdenden Oberflächen-Krümmungsradien die Schwierigkeiten zu, 3D Flächen frei von Fehlern ("Artefakten") zu beschichten.

Zwar ließen sich all die Probleme theoretisch leicht beseitigen, wenn mit einer Einzeldüse alle Punkte in freier Weise auf die Oberfläche aufgetragen werden würden. Jedoch sind auf diese Weise keine produktiven Arbeitsprozesse für die Schichtauftragung möglich. Also ist man auf die Verwendung von Beschichtungsköpfen angewiesen, die eine möglichst große Anzahl von Düsen aufweisen, dabei eine möglichst große Gesamt-Applikationsbreite haben und auf diese Weise eine für industrielle Zwecke ausreichend hohe Flächen-Beschichtungsrate haben.

Der bekannte Stand der Technik umfasst Folgendes: Um kleinere Un-Parallelitäten eines Beschichtungsbereichs wie z.B. eines Autodaches auszugleichen, sei auf die Druckschrift DE 10 2014 017 707 A1 verwiesen. Diese basiert auf der Verwendung eines nichtrotationssymmetrischen Beschichtunsmittelstrahls und schlägt die Drehung des Applikators um die Strahlachse während der Bahnbewegung vor. Damit ist durch Schrägstellung des Applikators die effektive Applikationsbreite in Bahnrichtung veränderbar und gekrümmte Ränder können in gewissem Maße abgebildet werden. Da sich während des Drehens die abgelegenen Seiten des Beschichtungsmittelstrahls aufgrund der Überlagerung von Bahnbewegung und Drehung mit unterschiedlicher Geschwindigkeit relativ zur Oberfläche bewegen, was einen direkten Einfluss auf die Beschichtungsdicke hat, sind insgesamt nur kleine Rotationsgeschwindigkeiten zulässig.

In DE10 2014 wird für die grafische Inkjet-Bedruckung von 3D-Flächen, insbesondere Fahrzeugen, vorgeschlagen, das Druckbild aus vielen geraden Bahnstücken zusammenzusetzen, die jeweils schräg zueinander verlaufen sollen, am Besten mit Winkeln grob um die 45 (135) Grad, jedenfalls weit entfernt von den oben beschriebenen kritischen Winkeln. Hierbei wird auch die Möglichkeit in Betracht gezogen, von einer rechteckigen Form einer Druckbahn durch Verdrehung des Inkjetkopfes während der Bewegung abzuweichen. Dennoch sind auch hier die Möglichkeiten, beliebige, mehrfach gekrümmte 3D-Flächen vollständig und frei von Artefakten zu bedrucken, eingeschränkt.

In DE 10 2012 005 650.8 wird ein Applikationsgerät für die Auftragung von Farben oder Lacken mittels manueller, automatischer oder robotischer Führung vorgeschlagen. Der darin enthaltene DOD Beschichtungskopf kann gekrümmte Bahnen, auch enge Kreisbewegungen ausführen. Hierbei wird eine Drehung des Beschichtungskopfes um die Oberflächen- Senkrechte während der Bahnbewegung ermöglicht, was aber bedeutet, dass unterschiedliche Düsen eine unterschiedliche Anzahl von Beschichtungspunkten pro Zeit abgeben müssen, damit die Beschichtungspunkte aller Druckdüsen den gleichen Abstand untereinander behalten. Im Gegensatz zu Beschichtungsköpf-Steuerungen des Standes der Technik, welche für alle Düsen nur eine einzige Feuerfrequenz zur Verfügung stellen, können die einzelnen Düsen zu beliebigen Zeitpunkten feuern bzw. werden mit unterschiedlichen Feuer-Frequenzen angesteuert. Diese Druckschrift liefert aber keine Lösung für die Vermeidung der Stufenbildung an Rändern von Beschichtungsbereichen, die nicht senkrecht oder parallel zur Richtung der Beschichtungsbahnen 6 verlaufen.

Somit ist es Aufgabe der Erfindung, ein geeignetes Druckbild sowie geeignete Druckverfahren und -Vorrichtungen zu schaffen, um mittels Beschichtungsköpfen mit einer möglichst großen Zahl von in Zeilen fest angeordneten Druckdüsen, insbesondere auch bei einem Düsenabstand bis in den Millimeterbereich, ein beliebiges Beschichtungsbereich 3 ohne sichtbare Stufenbildung randscharf, sowie innerhalb der Beschichtung frei von Artefakten in Form von lokalen Unterbeschichtungen oder Überbeschichtungen zwischen benachbarten Beschichtungsbahnen auf zwei- oder dreidimensionalen Oberflächen mit hoher Beschichtungsrate im Bereich von Quadratmetern pro Minute aufzutragen.

Die Aufgabe wird gelöst durch das erfindungsgemäße Verfahren, welches darauf basiert, dass der Beschichtungsbereich 3 in irgendeiner Weise in ein oder mehrere Beschichtungsbahnen 6 aufgeteilt werden muss. Diese müssen sich perfekt und Stufen-frei an benachbarte Beschichtungsbahnen 6 oder an Kanten des Beschichtungsbereichs 3 anfügen. Dies gelingt, indem die Positionierung der Beschichtungspunkte 8 auf den Spuren 7 innerhalb der Beschichtungsbahnen 6 so erfolgt, dass Konturen optimal abgebildet werden können. Die vorliegende Erfindung liefert die Verfahren und Vorrichtungen zur Verringerung der Stufenbildung an den Rändern eines Beschichtungsbereichs 3. Als Druckbild wird hier die Gesamtheit aller Beschichtungspunkte 8 verstanden, aus denen der Beschichtungsbereich 3 zusammengesetzt ist. Dabei ist es unerheblich, ob nach der Trocknung noch tatsächlich einzelne Beschichtungspunkte 8 erkennbar sind oder ob ein perfekter Verlauf die einzelnen Beschichtungspunkte 8 stattgefunden hat.

Hierbei ist somit eine mittels eines Mehrkanal-Druckkopfes 5 in einem Beschichtungsbereich 3 erzeugte Beschichtung (in der Bedeutung "aufgetragene Schicht") aus einem Beschichtungsmittel auf einer zwei- oder dreidimensionalen Oberfläche 2 eines Objektes 1 aufgebaut aus Beschichtungspunkten 8 entlang von Spuren 7 ein oder mehrerer Beschichtungsbahnen 6, wobei der Anfangs-Beschichtungspunkt AP mindestens einer Spur 7 an einer Anfangskontur AK und End-Beschichtungspunkt EP der Spur 7 an einer Endkontur EK ausgerichtet ist.

Das Druckbild weicht von einem orthogonalen Raster ab, der Vorgang der Tropfenabgabe aus den Druckdüsen des Beschichtungskopfes kann als asynchron bezeichnet werden, da die Beschichtungspunkte 8 der von einem Beschichtungskopf 5 produzierten unterschiedlichen Beschichtungsspuren 7 individuell gegeneinander versetzt sind und unterschiedliche Abstände d_p zueinander aufweisen können. Eine Vorlage eines Beschichtungsbereichs 3 in Form eines Rasterbildes oder einer Vektorgrafik muss durch eine Datenverarbeitungsanlage (DV-Anlage) in ein entsprechendes Datenformat transformiert werden und es ist eine entsprechende Druckprozess-Steuerung sowohl bezüglich der Flächenabarbeitung als auch der Beschichtungskopf-Ansteuerung erforderlich.

Eine Anfangs- oder Endkontur kann geradlinig, gekrümmt und ihrerseits aus mehreren Konturen zusammengesetzt sein. Sie kann eine reine Hilfslinie sein und im Druckbild unsichtbar bleiben, beispielsweise für die Generierung von weiteren Beschichtungspunkten 8, oder eine real existierende Kontur auf der Oberfläche 2, wie beispielsweise ein Rand des Beschichtungsbereichs 3, oder ein Rand einer anderen Beschichtungsbahn 6.

Dabei sind zwischen Anfangs-Beschichtungspunkt AP und End- Beschichtungspunkt EP weitere Beschichtungspunkte 8 auf der Spur 7 eingepasst.

Dies wird bevorzugt auf alle Spuren 7 und Spur-Abschnitte aller Beschichtungsbahnen 6 angewendet. Eine Spur 7 einer Beschichtungsbahn 6 wird somit als die Menge der Beschichtungspunkte 8 verstanden, die zwischen einem Anfangs- und End-Beschichtungspunkt von einer spezifischen Druckdüse des Beschichtungskopfs 5 generiert werden. Die Menge aller Beschichtungspunkte 8, die innerhalb einer Beschichtungsbahn von einer Druckdüse des Beschichtungskopfes 5 appliziert wird, kann als Gesamtspur bezeichnet werden. Somit kann die Gesamtspur durchaus mehrere Anfangs- und Endkonturen kreuzen, was mehrere Spuren ergibt und was beispielsweise dann der Fall ist, wenn ein Beschichtungsbereich 3 im Innern weitere Muster, Lettern oder Grafiken enthält oder wenn im Randbereich eine Verzahnung zur benachbarten Beschichtungsbahn 6 aufweist.

Eine Beschichtungsbahn 7 selbst kann einen beliebig gekrümmten Verlauf haben. Die vorgenannten Konturen können schräg oder senkrecht zum Verlauf der Bahn ausgerichtet sein und haben ihrerseits einen beliebig gekrümmten Verlauf.

Die Einpassung der verbleibenden Beschichtungspunkte auf der Spur 7 zwischen Anfangs-Beschichtungspunkt

AP und End-Beschichtungspunkt EP kann beispielsweise so erfolgen, dass der Punkteabstand benachbarter Beschichtungspunkte möglichst exakt dem Spurabstand entspricht. So erreicht man dieselbe Punktedichte wie ein klassisches wie ein entsprechendes orthogonales (xy-) Raster. Grundsätzlich sind jedoch auch beliebige Punkt-Abstände denkbar.

Die Bestimmung des Punkteabstandes zwischen benachbarten Beschichtungspunkten 8 eine Spur 7 folgt beispielsweise nach der folgenden Rechenregel: Berechnung der Spurlänge LS zwischen Anfangs-Beschichtungspunkt AP und End-Beschichtungspunkt EP; ganzzahlige Division der Spurlänge durch den Soll-Punkteabstand d_xy ergibt die Anzahl der Punkte n; der Rest der ganzzahligen Division (modulo) wird durch die Punkteanzahl n geteilt, dies ergibt die Abstandskorrektur ddp; abschließend ergibt sich der Punkteabstand zu

$$d\_p = d\_xy + ddp.$$

Betrachtet man das Ergebnis des erfindungsgemäßen Druckbildes in Fig. 3b mit einer orthogonalen Rastergrafik des Standes der Technik wie in Fig. 2, so ist sowohl am oberen als auch am unteren Rand eine starke Verbesserung der Randqualität erkennbar und keine Stufenbildung erkennbar. Die Abbildung der Ränder erfolgt in nahezu perfekter Weise.

Das Druckbild erzielt im Gegensatz zum üblichen Raster-orientierten Druckbild sowohl eine weit bessere Konturabbildung als auch Defekt-freiere Flächenbeschichtung, da an den Übergängen zwischen Beschichtungsbahnen 6 weniger Fehler wie Unter- oder Überbeschichtungen auftreten.

Somit eröffnet das Verfahren die Möglichkeit, Drucktechniken mit geringer Auflösung für eine Anwendung zu verwenden, welche eigentlich höhere optische Abbildungsqualitäten erfordern würde. Alternativ kann jedoch auch die Druckqualität vorhandener hoch auflösender Beschichtungsköpfe weiter verbessert werden.

Die Anfangs- und/oder End-Beschichtungspunkte lassen sich mit einer Genauigkeit weit unterhalb eines originalen Punkteabstandes p_xy an Konturen ausrichten, beispielsweise mit 1 bis 10% des Rastermaßes im Vergleich zu einer Rastergrafik mit dem Punkteabstand p_xy. An dieser Stelle sei explizit darauf hingewiesen, dass die Bezeichnung Beschichtungspunkt 8 nicht zwingend mit einer Punkt- oder Kreisförmigen Form gleichbedeutend sein muss. Vielmehr stellt diese Vorstellung eine Idealisierung dar, die in der realen Technik selten vorzufinden ist.

Unter einem Beschichtungspunkt sollen daher hier auch abweichende Formen, wie z.B. elliptische, längliche oder seitlich ausgefranste Formen verstanden werden können.

Insbesondere kann es sinnvoll sein, ein oder mehrere Beschichtungspunkte 8 auf der Oberfläche länglich oder insgesamt als Linien zu gestalten, die mit einer Spur 7 einer Beschichtungsbahn 6 koinzidieren. Insgesamt ist ein Beschichtungspunkt 8 also als Niederschlag einer individuell diskret steuerbaren Menge eines Beschichtungsmittels auf einer Oberfläche zu verstehen.

Anfangs- und End-Beschichtungspunkt einer jeden Spur 7 liegen möglichst genau tangential an der entsprechenden Anfangs- oder Endkontur an. Alternativ können die Punkte mittig, tangential oder mit einem Offset beliebig versetzt zur Kontur angepasst sein, sodass ihre Mittelpunkte mit dieser zusammenfallen oder einen beliebigen Abstand zu dieser aufweisen. Somit soll ein Ausrichten "an" oder "mit" einem Rand oder ein Ausrichten mit einem positiven oder negativen Offset zu dieser innerhalb dieser Erfindung nicht so auszulegen sein, dass dies einen der anderen Fälle ausschließt. Mit einem Offset wird dem Anwender jedoch ein Mittel an die Hand gegeben, die Verlaufskinetik eines Beschichtungsmittels, die von vielen Faktoren abhängt, so zu kompensieren, dass im Endergebnis der optische Rand der Beschichtung wie gewünscht mit dem vorgeplanten Beschichtungsbereich 3, wie es in der Vorlage gegeben ist, zusammenfallen.

Für die Erläuterung der Erfindung und all ihrer Ausbildungen, Verwendungsmöglichkeiten und zugehörigen Verfahren sind mehrere Zeichnungen beigefügt.

Die Einpassung der Beschichtungspunkte 8 auf einer Spur 7 zwischen Anfangs-Beschichtungspunkt AP und End-Beschichtungspunkt EP kann prinzipiell beliebig erfolgen. Bevorzugt ist, dass zwischen dem Anfangs-Beschichtungspunkt AP und End-Beschichtungspunkt EP der wenigstens zwei Spuren 7 die übrigen Beschichtungspunkte 8 auf der jeweiligen Spur 7 auf ganzer Länge oder zumindest in Teilbereichen äquidistant eingepasst sind.

Es kann vorteilhaft sein, dass unterschiedliche Gruppen von Beschichtungspunkten 8 einer Spur 6 unterschiedliche Punkteabstände d_1 haben. Der Punkteabstand mindestens einer ersten Gruppe kann dabei beispielsweise vorgegeben werden, während der Punkteabstand mindestens einer verbleibenden Gruppe so bestimmt wird, dass die Punkte einer Spur mit zufriedenstellendem Endergebnis zwischen Anfangs-Beschichtungspunkt AP und End- Beschichtungspunkt EP der Spur so eingefügt sind, dass die Beschichtung keine optischen Defekte aufweist. Für die Generierung des Druckbildes kann es dabei vereinfachend sein, wenn sich mindestens eine Gruppe direkt an einem Anfangs-Beschichtungspunkt AP oder End-Beschichtungspunkt EP anschließt.

Ferner kann es von Vorteil sein, wenn die individuellen Abstände d_k,i zwischen Beschichtungspunkten 8 einer Spur 7 kleine Versätze Ad entlang der Spur in positiver oder negativer Spurrichtung zu Nachbarpunkten aufweisen. Diese Versätze können durch eine feste Rechenvorschrift deterministisch oder durch Zufallswerte stochastisch erzeugt werden und der originalen oder korrigierten Position einer Auswahl an Beschichtungspunkten oder aller Beschichtungspunkte 8 einer Spur 7 überlagert werden. Der Nutzen von beispielsweise kleinen stochastischen Versetzungen der Beschichtungspunkte im Bereich von < 20%, < 10% oder < 5% eines Punkteabstandes besteht darin, dass das Auge insgesamt ein gleichmäßigeres Druckbild wahrnimmt, indem die optische Wahrnehmbarkeit von Defekten im Druckbild, wie z.B. Linien oder Moire-Effekten verringert wird.

Wird von einem konstanten Tropfenvolumen des Beschichtungsmaterials bei der DOD- Applikation ausgegangen, so geht einer Verringerung des Punkteabstands eine Erhöhung der Schichtdicke einher und mit der Vergrößerung des Punkteabstand entsprechend eine Verringerung der Schichtdicke. Punkteabstand und Schichtdicke verhalten sich umgekehrt proportional. Es besteht bevorzugt die Möglichkeit, den Schichtdickenunterschied durch Anpassung der Tropfengröße zu kompensieren. Für jeden Punkt einer Bahn wird die Schichtdicke so angepasst, dass sie sich umgekehrt proportional zu mindestens einem zugehöriger Punkteabstand $d\_k$ zu einem Nachbarpunkt.

$$V\_drop \sim 1/d\_k$$

Bevorzugt wird somit das Tropfenvolumen der Beschichtungspunkte 8 so angepasst, dass die Schichtdicke im Mittel der Sollschichtdicke entspricht.

Enthält eine Spur 7 beispielsweise hunderte bis tausende Beschichtungspunkte 8, so lassen sich die vorgenannten Regeln zur Aufteilung von Beschichtungspunkten auf einer Spur 7 zwischen einem Anfangs-Beschichtungspunkt AP und einem End-Beschichtungspunkt EP jedoch bereits so umsetzen, dass die Spur der Beschichtungspunkte um maximal einen Punkteabstand gestreckt oder gestaucht werden muss. Wird beispielsweise davon ausgegangen, dass innerhalb einer Spur k ein konstanter Punkteabstand $d\_k$ für alle Beschichtungspunkte gewählt wird, so beträgt die relative Veränderung des Punkteabstandes $d\_k$ im Vergleich zum originalen Spurabstand $d\_{xy}$ in diesen Fällen 1/100 bis <<1/1000. Bei einem Spurabstand von beispielsweise 0,5 Millimetern liegt somit selbst bei sehr kurzen (< 5cm) Spuren 7 die Korrektur der Punkteabstände $d\_k$ im Bereich unter einem Prozent bezogen auf den Original-Spurabstand $d\_{xy}$.

Somit würde sich am Beispiel einer Spur von 5cm Länge auch die Schichtdicke des Beschichtungsmittels um maximal 1 % verringern oder vergrößern, je nachdem, ob die Punkteanordnung auf der Spur gestreckt oder gestaucht wurde. Bei 50cm Länge wären dies 0,1 %. Da diese Genauigkeiten (a) i. d. Regel unterhalb der Schichtspezifikation liegen und (b) unterhalb der Summe der Prozessungenauigkeiten (schwankende Eigenschaften des Beschichtungsmittels, Förderung des Beschichtungsmittels, Beschichtungskopf, Substrat- Schwankungen, Toleranzen der Bewegungsbahnen und Geschwindigkeiten, usw.) kann ggf. dennoch auf eine Schichtdickenkorrektur durch Anpassung der Tropfengröße verzichtet werden. Auch bietet sich ggf. aus der Beschichtungskopftechnologie nicht die technische Möglichkeit, die Tropfengröße in Abstufungen von 1 % oder darunter zu steuern.

Somit ist es sinnvoll, von der Methode der Tropfengrößen - Anpassung dann Gebrauch zu machen, wenn eine Gruppe von Beschichtungspunkten 8 einen untereinander konstanten Punkteabstand $p\_{k,1}$ aufweist, der sich um einen größeren relativen Faktor F von beispielsweise 1 %, 5% oder 10% vom originalen Spurabstand Punkteabstand $p\_{xy}$ unterscheidet. Dabei ist es sinnvoll, den Faktor F aus den technischen Gegebenheiten im Zusammenhang mit der Beschichtung vorzugeben. Im nächsten Schritt kann dann der Punkteabstand $p\_{k,1}$ für eine Gruppe von Beschichtungspunkten 8 ermittelt werden, so, dass letztendlich $p\_k, 1/p\_{xy} = F$ oder $p\_k, 1/p\_{xy} = 1/F$ gilt, je nachdem ob die Spur der Beschichtungspunkte 8 innerhalb der Gruppe gestreckt oder gestaucht wird. Der Wert des Faktors F kann beispielsweise gegeben sein durch das kleinste adressierbare Tropfengrößen - Inkrement eines Beschichtungskopfes, durch die Genauigkeit einer Druckquelle in der Beschichtungsmittelversorgung, oder durch die Genauigkeit in der Einhaltung von Stoffeigenschaften des Beschichtungsmittels wie z.B. der Rheologie.

Bevor weitere Ausführungsformen und Vorrichtungen, Verfahren, mögliche Bahnformen und Beschichtungsstrategien nach der vorliegenden Erfindung vorgestellt werden, soll die folgende Liste einen Überblick über die Figuren geben:

Fig. 1 dient der Definition der verwendeten Nomenklaturen.

Fig. 2 zeigt ein Beschichtungsergebnis für einen Beschichtungsbereich 3 auf dem Stand heutiger Technik in Rastergrafik.

Fig. 3a illustriert die Elemente eines Druckbildes anhand einer exemplarischen Beschichtungsbahn 6 mit Spur 7und Beschichtungspunkten 8 im Zusammenspiel mit Konturen 4.

Fig. 3b zeigt exemplarisch das Beschichtungsergebnis nach dem erfinderischen Prinzip für einen Beschichtungsbereich 3 wie in Fig. 2.

Fig. 4 zeigt ein Beschichtungsergebnis nach dem Stand heutiger Technik in Rastergrafik für zwei nebeneiner liegende Beschichtungsbahnen 6a und 6b, deren Bahnrichtungen einen Winkelunterschied von < 5 Grad haben.

Fig. 5 zeigt das Beschichtungsergebnis des Falles von Fig. 4a nach Anwendung der erfinderischen Lehre und Druckstrategien.

Fig. 6 zeigt das Beschichtungsergebnis nach Anwendung der erfinderischen Lehre und einer Druckstrategie für einen Beschichtungsbereich mit vier gekrümmten Rändern. Hierbei werden die Beschichtungspunkte 8 auf Spuren 7 verteilt, deren Verlauf sich aus einer gleichzeitigen Verdrehung des Beschichtungskopfes 8 während der Bewegung des Beschichtungskopfes 8 entlang der Beschichtungsbahn 6 ergibt.

Fig. 7a verdeutlicht drei Strategien für das Drucken eines beliebig geformten Beschichtungsbereichs 3.

Fig. 7b zeigt exemplarisch eine Beschichtungsstrategie zur Wiedergabe des Druckmusters "P" ohne Stufenbildung und mit umlaufender Beschichtungsbahn.

Fig. 8 gibt das Detail A in Fig. 7a vergrößert wieder, sodass die einzelnen Druckpunkte 8 erkennbar sind und verdeutlicht damit die Beschichtungsbahn-Führung und Winkelstellungen der Beschichtungsköpfe 5 zu verschiedenen Zeiten.

Fig. 9 zeigt exemplarisch eine Beschichtungsstrategie zur Abbildung von kreisförmigen bzw. auch elliptischen Punktemustern. Fig. 10a zeigt exemplarisch die seitliche Anknüpfung zweier Beschichtungsbahnen 6a und 6b mittels eines Überlappungsbereiches 10 unter Verwendung einer gezackten Kontur ("Stitching").

Fig. 10b zeigt exemplarisch die Anknüpfung zweier Beschichtungsbahnen 6a und 6b mittels eines Überlappungsbereiches 10 bei im Wesentlichen freier Aufteilung von Druckpunkten 8 zwischen deckungsgleichen Spuren 7 der beiden Beschichtungsbahnen.

Fig. 11 zeigt wesentliche Nomenklaturen im Zusammenhang mit der Druckpunkte - Generierung auf einer Spur $s_{i,j}$.

Fig. 12 zeigt exemplarisch die zeitliche Abfolge von Feuerzeitpunkten an die beispielsweise sieben Druckdüsen 8 eines Beschichtungskopfes 5 bei der Bewegung entlang eines gekrümmten Beschichtungssegments.

Fig. 13 gibt schematisch einen Systemaufbau für die Applikation von Beschichtungsbereichen 3 auf dreidimensionale Oberflächen 2 von Objekten 1 wieder.

Fig. 14 veranschaulicht wesentliche Elemente eines Algorithmus eines Mikroprozessors innerhalb einer Echtzeit-Kopfsteuerung 18 zur zeitlich asynchronen Ansteuerung von Druckdüsen eines Beschichtungskopfes.

Fig. 15 zeigt exemplarisch ein mögliches Datenformat für die Kommunikation von Druckdaten an die Echtzeit-Kopfsteuerung 18.

Fig. 16 veranschaulicht exemplarisch wesentliche Schritte des Prozessablaufes in einer DV- Anlage zur Erstellung der Beschichtungsstrategien, Beschichtungsbahnverläufe und Punktemuster.

Fig. 17 veranschaulicht eine weitere Strategie zur Verringerung der optischen Wahrnehmbarkeit der Anknüpfung zweier Beschichtungsbahnen 6 durch Verteilung der Beschichtungspunkte 8 auf mehrere Layer L in eine DV-Anlage.

Fig. 18 veranschaulicht eine Sequenz von über 2 Layern zirkulierenden Beschichtungsschritten BS, wobei die Einzelstrukturen 20 der zwei Layer Linien sind.

Fig. 19 zeigt ein hexagonales Muster aus Beschichtungspunkten zur Veranschaulichung diesbezüglicher Beschichtungsstrategien.

Wie oben gezeigt, kann der Beschichtungsbereich dazu beitragen, die Stufenbildung an Anfangs- und Endkonturen weitestgehend zu minimieren. Um diese also in der beschriebenen Weise abzubilden, besteht als erste Möglichkeit, Beschichtungsbahnen 6 so bzgl. einer allgemeinen Kontur wie beispielsweise einem Rand des Beschichtungsbereichs 3 oder einer anderen Beschichtungsbahn 6 anzuordnen, dass diese Anfangskonturen AK oder Endkonturen EK der Beschichtungsbahn darstellen, somit entweder die Anfangs- Beschichtungspunkte AP oder End-Beschichtungspunkte EP nach dieser Kontur ausgerichtet sind. Dies ist vorteilhaft, wenn der Rand zur Hauptrichtung HR einer Beschichtungsbahn 6 bzw. einer jeden Spur 7 am Schnittpunkt mit der Kontur einen Winkel zwischen bevorzugt zwischen 15° und 165°, besonders bevorzugt zwischen 60° und 120° bildet.

Grundsätzlich ermöglicht das Beschichtungsverfahren (s.u.) die generelle Verwendung von gekrümmten Beschichtungsbahnen 6, da durch eine individuelle Einzeldüsen-Ansteuerung unterschiedliche Oberflächen-Geschwindigkeiten v_S der Spuren 7 der Druckdüsen so ausgeglichen werden können, dass durch Anpassen der individuellen Tropfenfrequenzen der Düsen an deren individueller Oberflächengeschwindigkeit v_S unabhängig variiert werden kann.

Während der digitalen Druckvorbereitungsstufe (klassisch: Druckvorstufe) ergeben sich umfangreiche Möglichkeiten für die Planung der Beschichtungsbahnen 6, indem auch oder überwiegend von gekrümmten Beschichtungsbahnen 6 Gebrauch gemacht wird. Dies ist insbesondere vorteilhaft im Fall von dreidimensional gekrümmten Oberflächen 2.

Bevorzugt besteht daher auch die Möglichkeit, eine Beschichtungsbahn 6 parallel zu einer gekrümmten Kontur auszurichten. Eine Seitenkante SKA der Beschichtungsbahn 6 wird mit der Kontur passgenau zur Deckung gebracht oder weist zu dieser einen Parallelversatz, also einen positiven oder negativen Offset auf.

Grundsätzlich unterscheiden sich die Spurlängen der Spuren 7 einer Beschichtungsbahn 6 entsprechend des Krümmungsradius der Bahnkurve. Innen gelegene Spuren 7 sind kürzer als außen gelegene. Bevorzugt werden zwischen den Anfangs- und End- Beschichtungspunkten einer jeden Spur 7 so viele Beschichtungspunkte auf der Spur 7 eingefügt, dass der Punkteabstand d_k möglichst nahe an den originalen Punkteabstand p_xy approximiert wird. Auf diese Weise bleibt die Schichtdicke einer Beschichtungsbahn 6 über die gesamte Breite auch bei Krümmungen konstant.

Eine Drehung des Beschichtungskopfes, die dazu führt, dass die Reihe der Druckdüsen eines Beschichtungskopfes ihre Ausrichtung relativ zur Hauptrichtung HR einer Beschichtungsbahn über der Zeit verändert, resultiert automatisch in einer Veränderung der Breite der applizierten Beschichtungsbahn. Fig. 5 veranschaulicht diese Möglichkeit, mit Bezug auf das beschriebene Druckbild und Verfahren. Damit es bei einer Reduzierung der Druckbreite nicht zu einer Schichtdickenzunahme kommt, schließt die Anwendung des beschriebenen Druckbildes und Verfahrens somit die Möglichkeit ein, dass die Beschichtungsbahn 6 zumindest in einem Abschnitt in ihrer Breite verringert wird und diesem Bereich das Tropfenvolumen und/oder der Abstand der Beschichtungspunkte 8 zueinander angepasst ist. Somit stehen zu einer Schichtdickenkorrektur die zwei Parameter Punkteabstand Tropfenvolumen zur Verfügung.

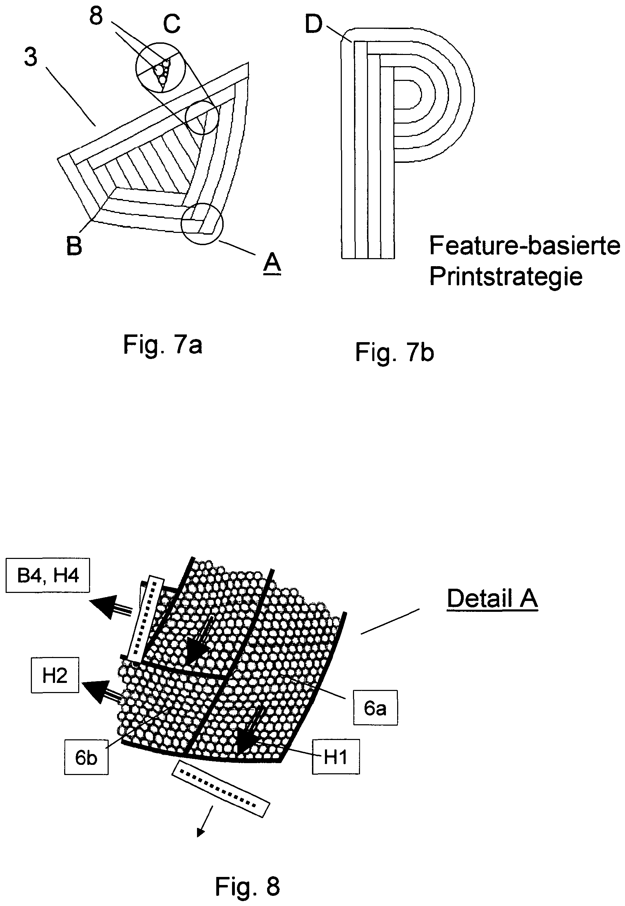

Aus diesen Möglichkeiten ergeben sich mannigfaltige Beschichtungsstrategien, um beliebig geformte Beschichtungsbereiche 3 unter Verwendung von gekrümmten Beschichtungsbahnen 6 zu beschichten. Fig. 7a veranschaulicht die Verwendung von zwei mögliche Strategien. In Randnähe des Beschichtungsbereichs 3 werden die Beschichtungsbahnen 6 überwiegend tangential ein- oder mehrfach nach innen versetzt zu den geraden oder gekrümmten Rändern 4 des Beschichtungsbereichs 3 verlaufen, wobei die Beschichtungsbahnen 6 lückenlos seitlich aneinander anschließen. Dabei stehen unterschiedliche Möglichkeiten zur Verfügung, wie die verschiedenen Beschichtungsbahnen 6 vor allem im Anfangs- und Endbereich aneinander anknüpfen. Eine kleine Auswahl ist in Fig 7a dargestellt in den Details A, B, C und in Fig. 7b im Detail D.

Wenn die Seitenkante SKA einer ersten Beschichtungsbahn 6a mit einer ersten Kontur zusammenfällt und die Seitenkante SKA einer zweiten Beschichtungsbahn 6b mit einer zweiten Kontur zusammenfällt und die beiden Konturen einen Winkel von bevorzugt zwischen 60° bis 120° einschließen, dann ist die in Detail A gezeigte Anknüpfung der beiden Beschichtungsbahnen von Vorteil. Diese ist in Fig. 8 vergrößert dargestellt. In diesem Fall wird die zweite Kontur bevorzugt als Angangs- AK oder Endkontur EK der Beschichtungsbahn 6 verwendet. Im Fall von Fig. 7a und Fig. 8 sind die erste und zweite Kontur jeweils Randkonturen 4 des Beschichtungsbereichs 3. Wie in Fig. 7a und 8 gezeigt, ist die an eine erste Beschichtungsmittelbahn 6a anknüpfende zweite Beschichtungsmittelbahn 6b mit ihrer Anfangskontur AK an die Seitenkante SKA der ersten Beschichtungsmittelbahn 6a angesetzt. Die Seitenkante SKA der zweiten Beschichtungsmittelbahn 6b und Endkontur der ersten Beschichtungsmittelbahn 6a befinden sich auf einer gemeinsamen Kontur, die mit der Randkontur 4 des Beschichtungsmittelbereiches zusammenfallen.

Wenn die Seitenkante SKA einer ersten Beschichtungsbahn 6a mit einer ersten Kontur zusammenfällt und die Seitenkante SKA einer zweiten Beschichtungsbahn 6b mit einer zweiten Kontur zusammenfällt und die beiden Konturen einen Winkel von bevorzugt zwischen 120° und 180° einschließen, dann ist die in Detail B in Fig. 7a gezeigte Anknüpfung der beiden Beschichtungsbahnen von Vorteil. In diesem Fall ist die Anknüpfung der beiden Beschichtungsbahnen 6a und 6b so gestaltet, dass die Endkontor EK der ersten Beschichtungsbahn 6a mit der Anfangskontur AK der ersten Beschichtungsbahn 6a zusammenfällt. Mit dem Detail D in Fig. 7b soll demonstriert werden, dass es auch möglich ist, kleine Radien innerhalb einer Beschichtungsbahn 6 zu realisieren. Hierbei ist es nicht erforderlich, eine weitere Beschichtungsbahn anzuknüpfen.

Wie in Fig. 7a in der Mitte dargestellt, enthält ein weiterer Teil des Beschichtungsbereichs 3 Beschichtungsbahnen 6, die überwiegend parallel verlaufende, gerade oder gekrümmte Beschichtungsbahn-Stücke 6 aufweisen. Diese weisen Anfangs- und Endkonturen auf, welche in dem dargestellten Beispiel überwiegend Seitenkanten SKA anderer Beschichtungsbahnen 6 sind.

Trotz vieler Möglichkeiten der Verwendung von gekrümmten Beschichtungsmittelbahnen 6 kann es dennoch möglich sein, dass einzelne kleinere Bereiche insbesondere in Ecken nicht optimal in Form von Beschichtungsmittelbahnen 6 beschichtet werden können. Hier wird bevorzugt vorgeschlagen, dass einzelne Flächenelemente des Beschichtungsbereichs 3 ein freies Punktemuster enthalten, welches durch eine einzelne Druckdüse des Beschichtungskopfes 5 erzeugt wird. Dabei kann es vorteilhaft sein, Beschichtungspunkte 8 unterschiedlicher Größe zu verwenden und die Position der Beschichtungspunkte und deren individuelles Tropfenvolumen so zu wählen, dass unter Berücksichtigung des Verlaufs das Flächenelement mit einer vorgegebenen Schichtdicke beschichtet wird. Somit enthält die Beschichtung Bereiche mit einem freien Punktemuster, das Beschichtungspunkte 8 enthält, die sich in Ihrer Größe wesentlich von der mittleren Größe der Beschichtungspunkte 8 des Beschichtungsbereichs 3 unterscheiden, siehe Detail ein Fig. 7a.

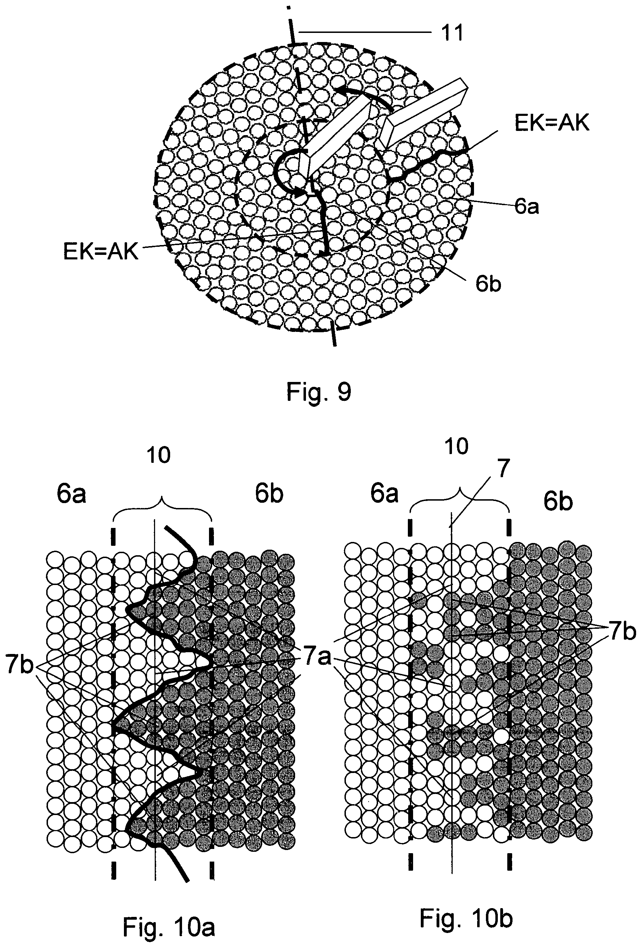

Bevorzugt können Teile der Beschichtung auf einer Oberfläche 2 des Objektes 1 ein Punktemuster 8 aufweisen, das kreisförmig um eine Achse 11 angeordnet ist. Diese kann beispielsweise, wie in Fig. 9 dargestellt, senkrecht zur Oberfläche 2, aber auch beliebig schräg im Raum liegen. So kann beispielsweise die Oberfläche 2 in einem Teilbereich selbst aus der Rotation einer eindimensionalen Flächenkontur um eine Achse 11 im Raum hervorgegangen sein. Beispiele hierfür sind eine Kugel, eine Pyramide, ein Kegel oder eine Zigarre, oder der Rumpf eines Flugzeuges. Um diese Flächen zu beschichten, verlaufen einzelne Beschichtungsbahnen 6 parallel nebeneinander und kreisförmig um die Achse 11. Dabei können zumindest einzelne Beschichtungsbahnen 6 eine volle Rotation um 360 Grad ausführen, sodass die Endkontur EK mit der Anfangskontur AKderselben Beschichtungsbahn 6a oder 6b (Fig. 9) zur Deckung kommt. Bevorzugt können dann auch die Beschichtungsbahnen 6 so angeordnet sein, dass sie ebenfalls rotationssymmetrisch um die Achse 11 zur Oberfläche 2 angeordnet sind. Somit wird eine Beschichtung vorgeschlagen, dadurch gekennzeichnet, dass wobei in Beschichtungsbereichen 3, die auf einer Oberfläche 2 des Objektes 1 gelegen sind, die zumindest in Teilen zu der Achse 11 rotationssymmetrisch geformt ist, die Beschichtungsbahnen 6 so angeordnet sind, dass die Hauptrichtung HR zumindest in Bereichen in Rotationsrichtung tangential zur Oberfläche 2 verläuft.

Ein Sonderfall ist dadurch gekennzeichnet, dass zumindest Teile des Beschichtungsbereichs 3 ein Rotationsmuster enthalten, wobei zumindest in Teilen des Beschichtungsbereichs 3 die Druckpunkte 8 auf kreisförmigen Spuren 7 liegen, deren Rotationsachse 11 mit der Achse einer Druckdüse des Beschichtungskopfes 5 zusammenfällt. In diesem Fall findet eine reine Drehung des Beschichtungskopfes statt, siehe Beschichtungsbahn 6b in Fig. 9.

In einen Sonderfall ist weiterhin eine Beschichtung dadurch gekennzeichnet, dass der Anfangs-Beschichtungspunkt AP und End-Beschichtungspunkt EP einer Spur 7 identisch sind. Dabei kann der resultierende runde, bevorzugt aber längliche oder linienartig geformte Beschichtungspunkt 8 zu eine Anfangskontur AK und eine Endkontur EK so ausgerichtet sein, dass er durch diese Konturen an gegenüberliegenden Seiten tangiert wird.

Eine Vielzahl weiterer Beschichtungsstrategien sind denkbar, wie z.B. angelehnt an Segmentbogenmuster, Hexagonal-Muster, öder die Beschichtung in spiralförmigen oder elliptischen Bahnen. All diese werden ermöglicht durch den erfinderischen Grundgedanken, der durch die Merkmale des Anspruch 1 wie ursprünglich eingereicht definiert ist. Eine Schwierigkeit kann stets sein, zwei Beschichtungsbahnen 6a und 6b aneinander zu fügen, so, dass keinerlei Schicht-Defekte erkennbar sind. Besonders empfindlich erkennt das Auge schon schwache Anzeichen von Linien, die möglichst zu vermeiden sind. Das aus der Drucktechnik bekannte "Stitching" lässt hier sich auch auf das erfindungsgemäße Verfahren anwenden: Dabei werden zwei benachbarte Bahnen 6a und 6b so gelegt, dass sie sich in einem Überlappungsbereich 10 überlappen. In diesen wird sodann eine Hilfskontur eingefügt, welche nicht einer langgezogenen Linie entspricht. Beim Stitching ist dies beispielsweise eine Zickzack-Linie. Die Beschichtungspunkte in diesem Bereich werden sodann zwischen den beiden Beschichtungsbahnen 6a und 6b aufgeteilt. Dieser Fall ist in Fig. 10a dargestellt.

Somit wird eine Beschichtung vorgeschlagen, dadurch gekennzeichnet, dass sich zwei Beschichtungsbahnen 6a und 6b überlappen, wobei in einem Überlappungsbereich 10 durch Hilfskonturen definierte Flächenanteile zwischen der ersten Beschichtungsbahn 6a und der zweiten Beschichtungsbahn 6b aufgeteilt werden. Dabei können beliebige Randkonturen einer Beschichtungsbahn 6a mit einer beliebigen Randkontur einer anderen Beschichtungsbahn 6b überlappt werden. Auch brauchen einzelne Spuren 7 der beiden Beschichtungsbahnen 6a und 6b innerhalb des Überlappungsbereich nicht deckungsgleich zu sein.

In Fig. 10b ist beispielhaft gezeigt, dass in einem Überlappungsbereich 10 einzelne Beschichtungspunkte 8 oder Gruppen von Beschichtungspunkten frei einer Beschichtungsbahn 6a oder 6b zugeordnet werden kann. Hierfür ist es von Vorteil, wenn die Beschichtungsbahnen 6a und 6b sich so überlappen, dass mindestens eine Spur 7a der Beschichtungsbahn 6a mit einer Spur 7b der Beschichtungsbahn 6b deckungsgleich sind und Beschichtungspunkte 8 dieser Spuren unter den Beschichtungsbahnen 6a und 6b aufgeteilt werden. Somit wird eine Beschichtung vorgeschlagen, dadurch gekennzeichnet, dass sich zwei Beschichtungsbahnen 6a und 6b seitlich so überlappen, dass in dem Überlappungsbereich 10 zumindest eine Spur 7a der ersten Beschichtungsbahn 6a und eine Spur 7b des zweiten Beschichtungsbahn 6b im Wesentlichen deckungsgleich sind und Beschichtungspunkte 8 so unter den Spuren 7a und 7b aufgeteilt werden, dass die Spuren 7a und 7b in der Summe eine durchgehende Beschichtung bilden. Dabei kann in dem Überlappungsbereich 10 mindestens ein Beschichtungspunkt 8 um mindestens 20% kleiner als dessen benachbarter Beschichtungspunkt sein.

In einer weiteren Ausbildung ist das Beschichtungsmittel lasierend, d.h. zumindest teilweise transparent, beispielsweise eine lasierende Farbe oder ein lasierender Lack. Insbesondere kann dies auch ein Lack oder eine Tinte in einer der Grundfarben Yellow, Magenta, Black oder Cyan sein. Insbesondere kann auch ein beliebiges grafisches Muster innerhalb des Beschichtungsbereichs 3 enthalten sein. Bei Einsatz eines lasierenden Beschichtungsmittels können optische Eigenschaften des Untergrundes oder weiterer unterhalb der Beschichtung vorhandener Beschichtungen durch die Beschichtung hindurch scheinen. Dabei soll hier auch ein Beschichtungsmittel als lasierend betrachtet werden, wenn darin Pigmente oder Streukörper enthalten sind, welche deutlich größer als die gestreute Lichtwellenlänge sind, jedoch nur in so geringer Beladung in dem Beschichtungsmittel vorliegen, dass die daraus erzeugte Beschichtung zumindest teilweise transparent ist.

Bevorzugt kann sodann eine Beschichtung nach einem der Ansprüche 1 bis 17 wie ursprünglich eingereicht, dadurch gekennzeichnet sein, dass der Beschichtungsbereich 3 mindestens eine weitere Beschichtung aus einem weiteren Beschichtungsmittel enthält.

An dieser Stelle sei angemerkt, dass die Beschichtung sowohl funktionellen Zwecken wie dem Schutz der Oberfläche vor Umwelteinflüssen oder der Veränderung der physikalischen oder chemischen Eigenschaften der Oberflächen (Benetzbarkeit, Glanz, Reflektivität, elektrische Leitfähigkeit oder Isolation, Glättung und Füllung, Steinschlagfestigkeit u.v.m.) sondern im Wesentlichen auch zur optischen Dekoration oder grafischen Gestaltung o.g. Oberflächen 2 dienen kann. Somit ist die hier beschriebene Lehre auch auf den Bereich des Inkjetdrucks übertragbar, sofern auch die im Folgenden beschriebenen Verfahren zur Druckdatenaufbereitung und Ansteuerung von Druckköpfen implementiert werden. Auf diese Weise kann alleine mittels intelligenter Bewegungs- Automatisierung und Beschichtungs-Prozesstechnik die effektive Auflösung heutiger Druckverfahren gesteigert werden, oder eine gewünschte Auflösung unter Verwendung von preislich günstigeren Druckköpfen, die nur eine geringere Auflösung bieten, erreicht werden.

Hierzu ist es nicht erforderlich, die Verfahren auf alle Details eines Bildes anzuwenden. Es reicht aus, ausgewählte grafische Elemente mit hohem Kontrast wie Ecken, Ränder und Kanten mittels Mustererkennungsalgorithmen zu extrahieren und den Konturen zuzuweisen für die Anwendung der hier beschriebenen Lehre.

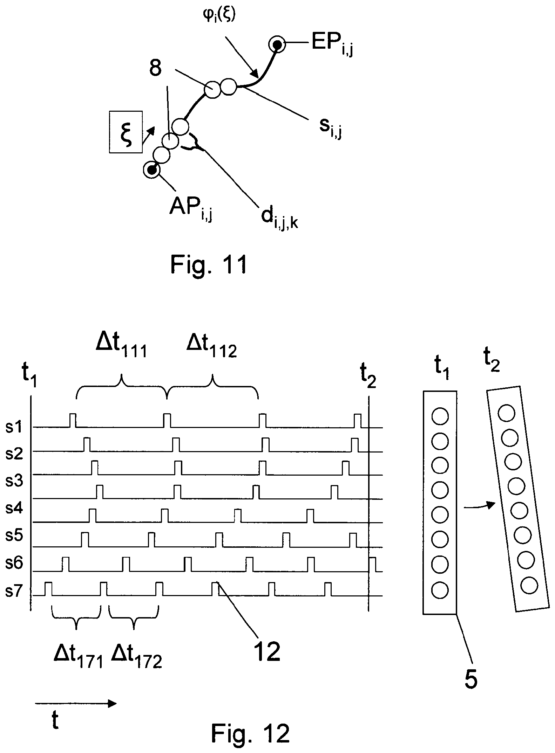

Die Erzeugung der Beschichtung erfordert Vorrichtungen und Verfahren, die im Folgenden vorgestellt werden: Zur Erläuterung des Verfahrens zur Erzeugung der Beschichtung sind die Nomenklaturen in Fig. 11 anhand einer Spur $s_{i,j}$ eine Beschichtungsbahn $B_i$, auf der sich Beschichtungspunkte $P_{i,j,k}$ befinden, die zu ihren nachfolgenden Beschichtungspunkten $P_{i,j,k+1}$ einen Abstand $d_{i,j,k}$ besitzen. Die Spur $s_{i,j}$ erstrecke sich von einem Anfangs-Beschichtungspunkt AP bis inklusive einem End- Beschichtungspunkt EP. Die Indizes haben dabei die folgende Bedeutung:

Bahn-Index: i = 1 .. m

Spurindex auf der Bahn: j = ^ .. b

Index eines Beschichtungspunktes 8 auf der: k = 1 .. n

Die Anzahl b der Spuren entspricht der Anzahl der Druckdüsen eines Beschichtungskopfes 5, dabei können innerhalb einer Spur 7 mehrere Spursegmente vorhanden sein, wie beispielsweise im Falle der Spur 7a der Bahn 6a in Fig. 10a, welche aus drei Spursegmenten besteht. Dabei kann auf jedes dieser Spursegmente das Verfahren zur Platzierung der Beschichtungspunkte 8 zur Anwendung gebracht werden.

Am Index k ist erkennbar, dass die Anzahl der Beschichtungspunkte n auf den unterschiedlichen Spuren 7 keine Konstante, sondern eine Variable ist. Bei kreisförmigen Bahnen besitzt beispielsweise die Spur mit dem größten Bahnradius die meisten Beschichtungspunkte. Spuren, die ein oder mehrere Konturen kreuzen, welche Beschichtungsfreie Bereiche definieren, haben eine geringere Anzahl n an Beschichtungspunkten 8.

Das Grundprinzip für die zeitliche Ansteuerung ist in Fig. 12 anhand eines kurzen Bahnsegments für eine Krümmung enthält, veranschaulicht. Das Beschichten dieses Segmentes findet statt zwischen einem Anfangszeitpunkt t1 und einem Endzeitpunkt t2. Die einzelnen Druckdüsen sind als Kreise innerhalb des Beschichtungskopfes 5 dargestellt. Innerhalb des Zeitintervalls hat sich der Beschichtungskopf 5 fortbewegt und eine Drehung erfahren. Dabei wurden die Feuerzeitpunkte 12 so berechnet, dass die Beschichtungspunkte einer jeden Spur einen jeweils konstanten Abstand d_k zu ihrem Folgepunkt haben. Dieser entspricht dem oben hergeleiteten Wert d_p. Durch die Kreisbewegung ergeben sich daraus auf jeder Spur unterschiedliche Zeitabstände At zwischen den Feuerzeitpunkten 12 für jede Druckdüse gefeuert wird. Dargestellt ist in 7 Diagrammen der zeitliche Ablauf der Feuerzeitpunkte 12 für die Düsen bzw. Spuren s1 bis s7.

Zur Verdeutlichung der Indizierung sind die Zeitabstände $\Delta t_{i,j,k}$ für ausgewählte Feuerzeitpunkte angegeben, beispielsweise $\Delta t_{111}$ und $\Delta t_{112}$ in der Spur s1 oder $\Delta t_{171}$ oder $\Delta t_{171}$ in der Spur s7. Die Zeitabstände $\Delta t_{i,j,k}$ resultieren aus den Spurgeschwindigkeiten $V_{i,j,k}$, die aus der Bahngeschwindigkeit in Hauptrichtung H und Beschichtungskopfrotation zuvor vektoriell in einer Weise abgeleitet werden, wie es dem Durchschnittsfachmann bekannt ist. Unter $v_{i,j,k}$ wird die Geschwindigkeit der Druckdüse der Beschichtungsbahn i der Spur j verstanden, wenn der Beschichtungspunkt k appliziert wird. Somit ergibt sich:

$$\Delta t_{i,j,k} = d_{i,j,k} / v_{i,j,k}.$$

Um den Soll- Zeitpunkt 12 für die Abgabe eines einzelnen Beschichtungspunktes 8 einer jeden Spur j zu bestimmen, wird dem Feuerzeitpunkt des Vorgängerpunktes der Wert $\Delta t_{i,j,k}$ hinzu addiert. Die Durchführung des Verfahrens erfordert die Einhaltung eines genaues Zeit- und Ablaufplanes für alle Bewegungen und Drehbewegungen des Beschichtungskopfes, was durch den Beschichtungsroboter sicherzustellen ist. Der Verarbeitungsprozess läuft in Echtzeit ab, sodass in der Regel die Werte $v_{i,j,k}$ (t) oder $\Delta t_{i,j,k}$ (t) als Funktion eine globale Laufvariable "Zeit" t in einer Recheneinheit verfolgt werden. Zusätzlich oder alternativ kann die Bewegung und Synchronisation der Abgabezeitpunkte für Beschichtungspunkte 8 die Echtzeit-Verfolgung der tatsächlichen Bewegungskinematik (Zeit, Ort, Geschwindigkeit) z.B. aus Sensor- Messungen, also aus Ist-Daten der Bewegungsabarbeitung beinhalten oder grundsätzlich auf der Basis einer Spur-spezifischen Laufvariablen $\xi$ (siehe Fig. 11), die sowohl eine zeitliche Variable sein kann oder einen zurückgelegten Weg repräsentieren kann.

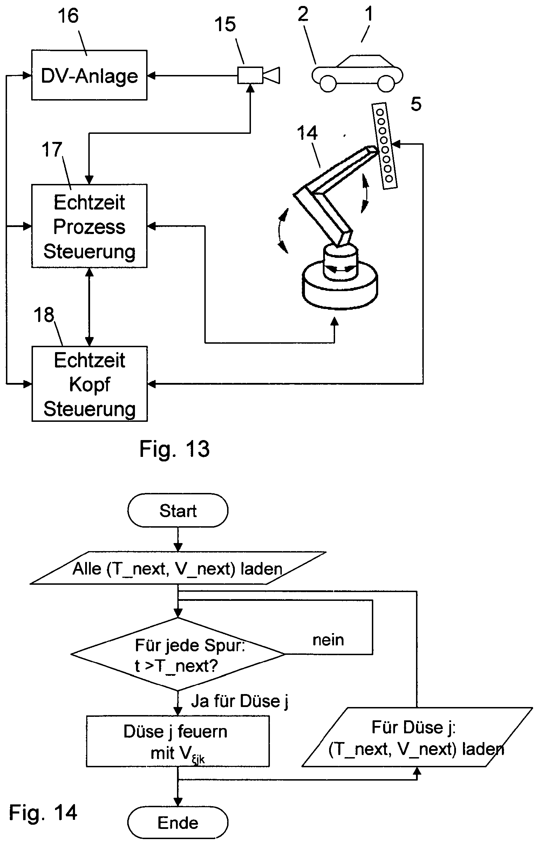

Insgesamt sind verschiedene Systemkomponenten erforderlich, um das erfindungsgemäße Beschichtungsverfahren durchführen zu können. In Fig. 13 sind nur in vereinfachter Weise die wichtigsten Komponenten dargestellt. In einer Datenverarbeitungsanlage 16 wird offline von einem Programmierer die Beschichtungsbahn - Planung nach den Lehren der vorliegenden Erfindung vorgenommen. Dieser Prozess kann auch als Druckvorstufe bezeichnet werden. Hierfür werden Daten der Oberfläche 2 des Objektes 1 und des Beschichtungsbereichs 3 verarbeitet. Daten der Oberfläche 2 können dabei bereits aus den Konstruktionsunterlagen des Objektes 1 in digitaler Form vorhanden sein. Alternativ können diese auch durch eine Flächenvermessung mittels einer optischen 3D- Vermessung 15 gewonnen werden. Als Ergebnis der Druckvorstufe wird mindestens ein Druck-Datensatz an die Echtzeit- Kopfsteuerung 18 übertragen, welche die Bahn-bezogenen Druckdaten enthalten, deren Format im Rahmen der Erfindung weiter unten vorgeschlagen wird. An eine Echtzeit-DV- Anlage 17 werden Bewegungsdaten und Steuerdaten für den Beschichtungsroboter 17 übertragen und weitere Konfigurations- und Steuerdaten werden an die Echtzeit- Kopfsteuerung 18 übertragen.

Der Echtzeit-Prozess umfasst die Bewegungssteuerung des Beschichtungsroboters 14, die Ansteuerung der Druckdüsen im Beschichtungskopf mittels der Echtzeit-Kopfsteuerung 18, sowie alle Funktionen der Beschichtungsmittel-Bereitstellung, - Druckregulierung - Temperierung, der Beschichtungsmittel-Wechsel und Spülschritte, der Beschichtungskopf- Pflege und Reinigung, und der Echtzeit-Überwachung der Beschichtungsprozesse, Vorbereitung der Oberfläche und Trocknung der Beschichtung.

Weiterhin wird ein Datenformat vorgeschlagen, das man als asynchrones Druckverfahren bezeichnen kann. Da in der Inkjet-Drucktechnik alle Düsen einer Reihe in einem Beschichtungskopf 5 zeitsynchron gefeuert werden, reichen rein Pixel-basierte Datensätze aus. Es werden üblicherweise nur die Farbwerte der einzelnen Pixel so an die Düsen zeilenweise übertragen, dass diese zum jeweils nächsten Feuerzeitpunkt parallel schnell genug abgearbeitet werden können.

Das Verfahren erfordert zu jedem Beschichtungspunkt 8 zumindest ein Datenpaar an Informationen: Ein erster Wert ist dabei eine zeitliche Information $\Theta_{ijk}$ bezüglich des Feuerzeitpunktes eines Beschichtungspunktes k auf einer Spur j auf einer Bahn i. Dieser Wert kann ein absoluter, also stetig mit jedem Beschichtungspunkt anwachsender Wert $T_{i,j,k}$ sein oder ein inkrementeller Wert, wie das o.g. Zeitintervall $\Delta t_{i,j,k}$. Der zweite Wert ist wie im herkömmlichen Datenformat ein das Tropfenvolumen definierender Wert. $V_{i,j,k}$. Somit ist jeder Beschichtungspunkt 8 mit dem Datenpaar ($\Theta_{ijk}$, $V_{i,j,k}$) eindeutig bestimmt.

Es gibt viele Möglichkeiten, die Datenpaare möglichst effizient und einfach seriell abrufbar in ein Datenformat zu speichern.

Eine Möglichkeit besteht darin, für alle Beschichtungspunkte aller Spuren aller Bahnen in beispielsweise dieser hierarchischen Weise zu speichern. Oder es kann stets eine Anzahl n von aufeinander folgenden identischen Datenpaaren zum Beispiel durch das Datentripel (n, $\Theta_{ijk}$, $V_{i,j,k}$) gespeichert werden. Dies ist zum Beispiel der Fall bei geraden oder konstant gekrümmten Beschichtungsbahnen 6, was bereits viele Fälle abdeckt.

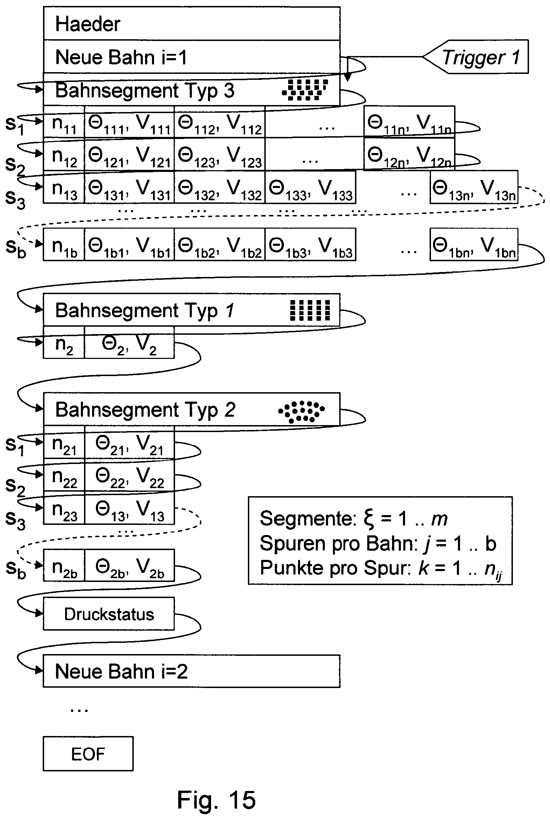

Allgemein kann eine Beschichtungsbahn so in mehrere Segmente unterteilt werden, dass sich daraus eine möglichst effiziente Datenrepräsentation in Form von Datenblöcken ergibt. In Fig. 1 wird ein Format vorgeschlagen, das eine einfache Klassifizierung in Form von Bahnsegment-Typen beinhaltet und auf diese Weise eine Resourcen-schonende Echtzeit- Abarbeitung ermöglicht. Es sei hier angemerkt, dass aufgrund der Unterteilung in Bahn- Segmente in der folgenden Beschreibung zu Fig. 15 von Bahnsegment-bezogenen Datenpaaren ausgegangen wird, welche statt dem Bahn-Index i den Segment-Index $\xi$ verwenden: ($\Theta_{\xi jk}$, $V_{\xi,j,k}$). Unterschiedliche Segmente einer Bahn werden also Daten-technisch wie unterschiedliche Bahnen behandelt.

Nach einem Header, der beispielsweise Projektdaten (Objekte, Oberfläche, Vorlage Beschichtungsbereich, Kunde, Beschichtungsmittel, Verdünnung, Druckparameter..) oder detaillierte Informationen zum Printjob (Anzahl Bahnen, Segmente, Spuren, Beschichtungspunkte, Kalibrierwerte, Art der Grafik, Datenformat, Kodierung) beinhalten kann, wird die Datei beispielsweise nach Beschichtungsbahnen strukturiert, darunter in Bahnsegmente $\xi$.

Der Datenblock eines Bahnsegmentes $\xi$ enthält nach der Angabe zur Typisierung (Typ 1: Rechteckmuster, Typ 2 Kreisbogen, Typ 3 beliebiges Muster) eine Angabe zur Anzahl n der Punkte einer jeden Spur gefolgt jeweils von den Datenpaaren ($\Theta_{\xi jk}$, $V_{\xi,j,k}$).

Im einfachsten Fall eines Rechteckmusters genügt beispielsweise die Angabe der Beschichtungspunkte-Anzahl für eine Spur 7, da alle Spuren identisch sind, sowie eines einzigen Datenpaares ($\Theta_{\xi jk}$, $V_{\xi,j,k}$), wenn es sich um einen Beschichtungsbereich ohne weitere interne Muster handelt (-> Typ 1). Im Fall eines Kreisbogens muss für jede Spur $s_j$ ein Datenpaar ($\Theta_{\xi jk}$, $V_{\xi,j,k}$) angegeben werden, damit trotz unterschiedlicher Spurgeschwindigkeiten individuell konstante Punkteabstände d_p auf jeder Spur gegeben sind, falls dies so geplant ist (-> Typ 2). Der Bahnsegment-Typ 3 ist dem allgemeinen Fall Vorbehalten, wo jedem Beschichtungspunkt 8 ein individuelles Tropfenvolumen und ein eigener Feuerzeitpunkt zugeordnet ist.

Es sei darauf hingewiesen, dass hier nur exemplarisch einzelne Segment-Typen herausgearbeitet und angegeben werden und die Vielzahl der Möglichkeiten nicht erschöpfend behandelt werden kann. Dabei basieren all diese auf der Generierung der Beschichtungspunkte 8 aller Spuren 7 aller Beschichtungsbahnen 6.

Zum Ablauf der Echtzeit Beschichtungskopfsteuerung folgendes: Um eine verzögerungsarme Abarbeitung der Datenpaare zu bekommen, sind diese in einem ersten Schritt in einen Arbeitsspeicher, Zwischenspeicher, bzw. Datenpuffer zwischen zu speichern, wo sie schnell abgerufen werden können. Im Unterschied zu der herkömmlichen Beschichtungskopfsteuerung verfügt die hier vorgeschlagene Beschichtungskopfsteuerung für jede Druckdüse über eine eigene Zeitsteuerung, welche imstande ist, die individuellen Feuerzeitpunkte in verzögerungsfreie Feuerbefehle umzusetzen. Vor jeder Abgabe eines Beschichtungspunktes 8 kann ein individueller Feuerzeitpunkt definiert werden. Das Prinzip der Zeitsteuerung sei an einer einzelnen Druckdüse erklärt: In einem ersten Schritt wird ein Datenpaar aus einer Zeitinformation und Tropfengrößenangabe ($\Theta_{\xi jk}$, $V_{\xi,j,k}$) geladen. Die Zeitinformation liege hier vereinfacht schon als Feuerzeitpunkt T_next vor. In einer Schleife wird fortlaufend die Systemzeit eines Mikroprozessors in Mikrosekundengenauigkeit mit dem Soll-Feuerzeitpunkt T_next verglichen ("Polling") und sofort nach Überschreiten eine Tropfenabgabe ausgelöst. Anschließend wird das Datenpaar für den nächsten Beschichtungspunkt auf der Spur geladen und der Vorgang wiederholt.

Hat der Beschichtungskopf eine größere Anzahl von Druckdüsen, so werden die Zeitabfragen in einer Unterschleife für alle Druckdüsen sequenziell durchgeführt und nach dem Feuern einer Düse j das entsprechende Datenpaar für diese Düse nachgeladen, siehe hier das Ablaufdiagramm in Fig. 14. Je nach Anzahl der Druckdüsen kann dies schon einen leistungsfähigen Mikrokontroller erfordern. Insbesondere erfordert das Feuern und Nachladen neuer Druckdaten stets eine höhere Anzahl an Taktzyklen, was dann zur Beeinträchtigung des Druckbildes führen kann, wenn die Feuerzeitpunkte zweier Druckdüsen zeitlich sehr nahe beieinander liegen. Besser geeignet hierfür sind daher grundsätzlich Parallelrechner, beispielsweise FPGAs. Es sei noch erwähnt, dass stets Echtzeit-Triggersignale zu gegebenen, programmierten Ereignissen von der Echtzeit-Prozesssteuerung an die Echtzeit Beschichtungskopfsteuerung übertragen werden, um beispielsweise den Drucktropfen- Generierungsprozess zu starten, pausieren oder zu beenden, oder um vorprogrammierte Prozesszyklen für die Reinigung oder den Wechsel des Beschichtungsmittels oder die Umstellung von Parametersätzen zu initiieren.

Somit werden auch Verfahren zur Herstellung einer Beschichtung auf einer zwei- oder dreidimensionalen Oberfläche 2 eines Objektes 1 in Form eines Beschichtungsbereichs 3 mit Hilfe eines Beschichtungskopfes 5, welcher entlang ein oder mehrerer Beschichtungsbahnen 6 vorgestellt, bestehend aus ein oder mehrere Spuren 7 von Beschichtungspunkten 8 eines Beschichtungsmittels, über die Oberfläche 2 mit einem Abstand DD geführt, dadurch gekennzeichnet, dass der Anfangs-Beschichtungspunkt AP mindestens einer Spur 7 an einer Anfangskontur AK ausgerichtet appliziert wird und der End- Beschichtungspunkt EP der Spur 7 an einer Endkontur EK ausgerichtet appliziert wird. Dabei können zwischen einem Anfangs-Beschichtungspunkt AP und End-Beschichtungspunkt EP mindestens einer Spur 7 weitere Beschichtungspunkte 8 auf der Spur 7 eingepasst appliziert werden, was so erfolgen kann, dass eine Beschichtung nach den Ansprüchen 1 bis 19 wie ursprünglich eingereicht resultiert.

Das technische Verfahren von der Beschichtungsdaten-Generierung bis zum Auftrag der Beschichtung kann näherungsweise durch die folgenden Schritte beschrieben werden:

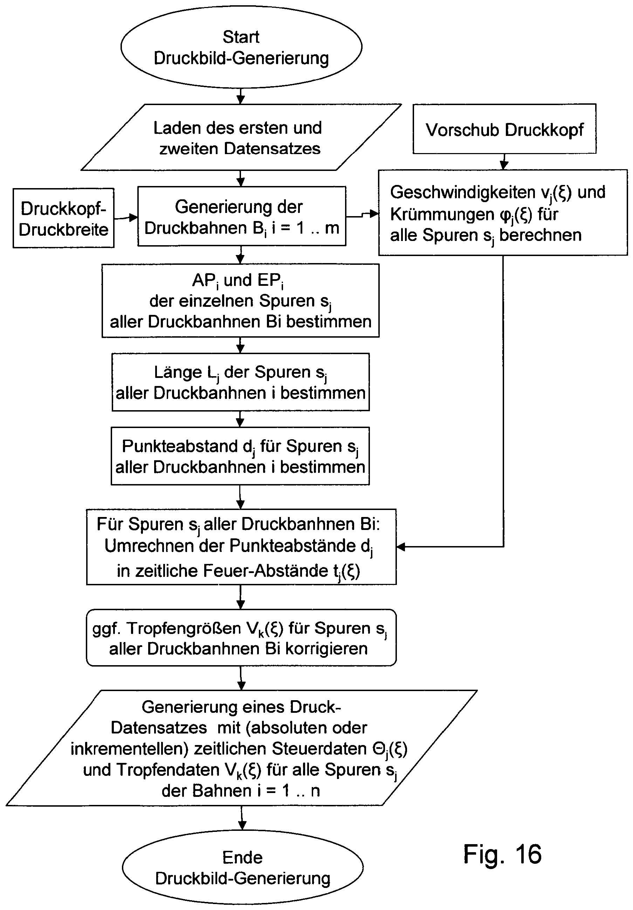

(a) Die Durchführung einer Druckdaten-Generierung in einer DV-Anlage auf der Grundlage eines ersten Datensatzes, der die Oberfläche 2 des Objektes beschreibt und eines zweiten Datensatzes, der den Beschichtungsbereich 3 beschreibt, mit den folgenden Unterschritten, siehe auch Fig. 16:

- Das Laden der zwei Datensätze und Aufstellen von geometrischen Beziehungen. Diese beschreiben die geometrische Lage des Beschichtungsbereichs zu den geometrischen Daten der Oberfläche 2.

- Die Generierung von Beschichtungsbahnen Bi und deren Spuren sj so, dass der Beschichtungsbereich 3 durch Beschichtungsbahnen mindestens vollständig bedeckt ist, unter Berücksichtigung von Anzahl und Abstand der Druckdüsen im Beschichtungskopf und des einzuhaltenden Abstandes DD zwischen Beschichtungskopf 5 und Oberfläche 2. Für die weitere Verwendung werden die beabsichtigten Beschichtungskopf- Geschwindigkeiten $vj(\xi)$ und Krümmungen $\varphi j(\xi)$ für alle Spuren sj berechnet.

- Das Bestimmen der Anfangs-Beschichtungspunkte APi und End-Beschichtungspunkte EPi aller Spuren 7 an Konturen 4, welche die Spuren 7 kreuzen.

- Gegebenenfalls das Auffüllen von weiteren Beschichtungspunkten 8 auf den Spuren 7 zwischen Anfangs-Beschichtungspunkt AP und End-Beschichtungspunkt EP und Bestimmen der Punkteabstände zwischen benachbarten Beschichtungspunkten 8 auf den Spuren 7. Handelt es sich wie in den überwiegenden Fällen um eine äquidistante Verteilung der Beschichtungspunkte auf der Spur 7, dann werden in einem Folgeschritt zuerst die Bahnlängen Lj der Spursegmente sj aller Druckbahnen i bestimmt, sodann die Punkteabstände dj benachbarter Beschichtungspunkte 8 für alle Spuren j Druckbahnen i berechnet; die Punkteabstände werden in Steuerzeiten für das Feuern der Druckdüsen zur Tropfenabgabe umgerechnet, hierfür werden die oben berechneten Geschwindigkeiten $vj(\xi)$ und Krümmungen $\varphi j(\xi)$ aller Spuren sj verwendet.

- Gegebenenfalls wird eine Korrektur der Tropfengröße der Beschichtungspunkte 8 so vorgenommen, dass eine Sollschichtdicke erreicht wird.

- Die Generierung eines Druckdatensatzes, welcher Beschichtungspunkt - spezifische Datenelemente enthält, die jeweils mindestens eine Zeit- oder Orts-bezogene Information und eine Volumen-bezogene Information zu ein oder mehreren Beschichtungspunkten 8 enthalten.

- Die Generierung von Bewegungsdaten für die Steuerung eines Beschichtungsroboters unter Berücksichtigung des Abstandes DD.

(b) Übertragen des Druckdatensatzes auf die Echtzeit-Beschichtungskopfsteuerung.

(c) Übertragen der Bewegungsdaten auf die Steuerung des Beschichtungsroboters.

(d) Schließlich die Durchführung des Beschichtungsprozesses unter Zugrundelegung der Druckdaten und Bewegungsdaten inklusive von Trocknungsprozessen.

Der Prozess des Beschichtens wird durchgeführt mit einer Vorrichtung zur Erzeugung einer Beschichtung auf einer zwei- oder dreidimensionalen Oberfläche 2 eines Objektes 1 in Form eines Beschichtungsbereichs 3, zusammengesetzt aus Beschichtungspunkten 8 eines Beschichtungsmittels, welche angeordnet sind entlang ein oder mehrerer Spuren 7 ein oder mehrerer Beschichtungsbahnen 6, gekennzeichnet durch eine Datenverarbeitungsanlage 16 zur Generierung eines Druckdatensatzes, welcher Beschichtungspunkt - spezifische Datenelemente enthält, die jeweils mindestens eine Zeit oder Orts-bezogene Information und eine Volumen-bezogene Information zu ein oder mehreren Beschichtungspunkten 8 enthalten und zur Generierung der Bahn- und Steuerdaten des Beschichtungsprozesses,

eine Echtzeit-Prozesssteuerung 17,

ein Beschichtungsroboter 14 zur Bewegung des Beschichtungskopfes in einem Abstand DD über die Oberfläche 2 des Objektes 1,

eine Echtzeit-Beschichtungskopfsteuerung, die konfiguriert ist, mindestens zwei Druckdüsen des Beschichtungskopfes asynchron anzusteuern, so, dass Anfangs-Beschichtungspunkte AP und End-Beschichtungspunkte EP der Spuren 7 an Konturen 4, welche die Spuren 7 kreuzen, angepasst sind,

einen Beschichtungskopf 5 mit mindestens einer Reihe von Druckdüsen, die geeignet sind, das Beschichtungsmittel in diskreten Mengen kontaktfrei auf die Oberfläche zu applizieren.

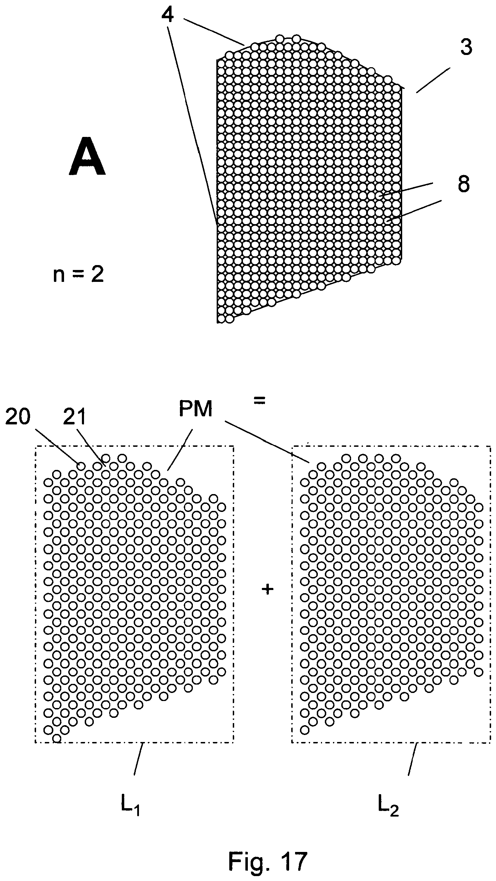

Neben den in Fig. 10a und Fig. 10b beschriebenen Maßnahmen zur Verringerung der optischen Wahrnehmbarkeit der Anknüpfung zweier Beschichtungsbahnen 6 innerhalb eines Beschichtungsbereiches 3, wie z.B. 6a und 6b, sind weitere erfindungsgemäße Strategien geeignet, die im Folgenden beschrieben werden:
Grundgedanke dieser weiteren Strategien ist, dass die Beschichtungspunkte 8 des Beschichtungsbereiches 3 in einem ersten Prozessschritt A (Fig. 17: Beispiel Punktemuster) auf n virtuelle Beschichtungs-Layer, im Folgenden kurz Layer L genannt, verteilt werden. Die Aufteilung der Beschichtungspunkte 8 auf verschiedene Layer $L_i$, i = 1..n, erfolgt in einer Datenverarbeitungsanlage oder einem Druckertreiber. Jeder Layer $L_i$ enthält somit eine Teilmenge aller Beschichtungspunkte 8 des Beschichtungsbereiches 3, die als Punktemuster $PM_i$ des Layers $L_i$ bezeichnet wird. Die Punktemuster $PM_i$ aller Layers $L_i$ ergänzen sich nach der Abarbeitung aller Layer L zu einer vollständigen Beschichtung.

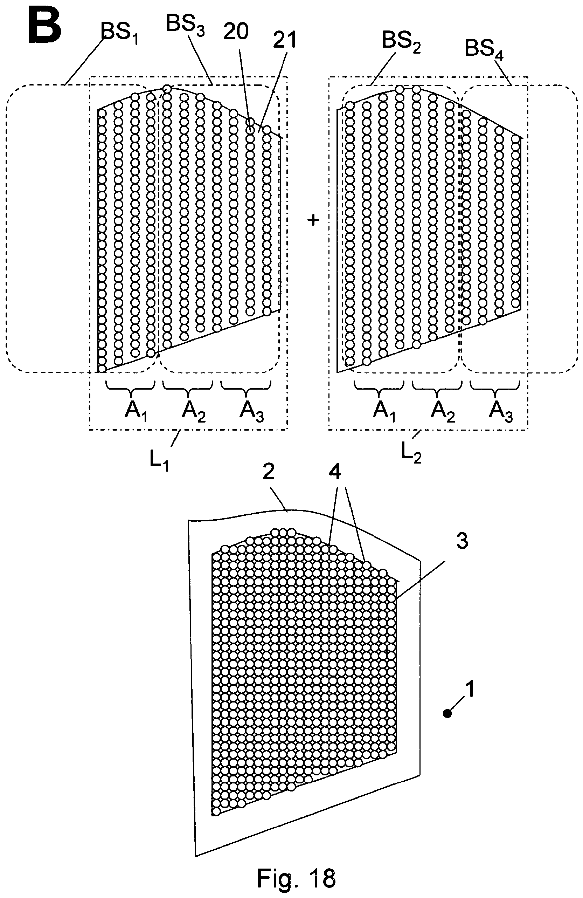

Wie in Fig. 17 illustriert, setzen sich Punktemuster PM zusammen aus über den Beschichtungsbereich 3 hinweg bevorzugt regelmäßig angeordneten Punkten, Punktegruppen oder Linien (Fig. 18), im folgenden Einzelstrukturen 20 genannt, zwischen denen sich Lücken 21 befinden, die von Einzelstrukturen 20 der übrigen Layer L aufgefüllt werden.

Wesentliches Merkmal ist, dass die Punktemuster $PM_i$ der einzelnen Layer $L_i$ so beschaffen sind, dass sie die Lücken in den Punktemustern $PM_j$ der anderen Layer $L_j$ besetzen und dass Beschichtungspunkte 8 verschiedener Layer örtlich nicht zusammenfallen, also nicht dieselbe Position besitzen. Somit sind die Punktemuster PM der verschiedenen Layer L komplementär. Eine vollständige Beschichtung bedarf der Abarbeitung aller Layer $L_j$.

Die verschiedenen Layer L werden in einem zweiten Prozessschritt B (Fig. 18: Beispiel Linienmuster), dem Applikationsschritt, mit ein oder mehreren, in der Regel aber einer Vielzahl von n Beschichtungsschritten $BS_i$ bis $BS_n$ gemäß einer Abarbeitungsstrategie unter Verwendung eines Beschichtungskopfes 5 auf die Oberfläche 2 aufgetragen. Dabei umfasst ein Beschichtungsschritt BS ausschließlich Einzelstrukturen 20 eines einzigen Layers L. Beispielsweise umfasst ein Beschichtungsschritt BS alle Einzelstrukturen 20 einer einzelnen Beschichtungsbahn 6 aus einem Layer L, wenn ein Beschichtungskopf 5 über das Objekt geführt wird.

Beschichtungspunkte 8, die mit demselben Layer L assoziiert sind, können auf der Oberfläche 2 identische oder unterschiedliche Punktgrößen aufweisen, entsprechend Linien identische oder unterschiedliche Linienbreiten. Ebenso können Beschichtungspunkte 8, die mit unterschiedlichen Layers $L_i$ assoziiert sind, auf der Oberfläche 2 identische oder unterschiedliche Punktgrößen aufweisen, entsprechend Linien identische oder unterschiedliche Linienbreiten. Punktgröße und Linienbreite resultieren aus der Drop-on- Demand Tropfengröße, der Kinetik und der Oberflächenbeschaffenheit.

Es ist anzustreben, dass Tropfengröße bzw. Linienbreite des an einer Stelle der Oberfläche 2 in der Abarbeitungsreihenfolge ersten Beschichtungsschrittes $BS_1$ so klein gewählt werden, dass sich die Einzelstrukturen 20 (Punkte oder Linien) des mit $BS_1$ assoziierten Layers $L_i$ auf der Oberfläche als isolierte Einzelstrukturen 20 abbilden, also als isolierte, sich nicht oder nur geringfügig berührende Punkte und/oder Linien, die nicht oder nur geringfügig ineinander verlaufen. Hierbei soll gewährt werden, dass aufgrund von Toleranzen beispielsweise der Drop-on-Demand Technologie, der Auftragsprozesse oder der Substrateigenschaften (z.B. Oberflächentextur oder lokale Unterschiede in der Benetzbarkeit) es vereinzelt oder vermehrt zu Berührungen zwischen den genannten Druckpunkten oder Linien kommen kann.

Es kann weiterhin vorteilhaft sein, wenn Tropfengröße bzw. Linienbreite des an einer Stelle der Oberfläche 2 in der Abarbeitungsreihenfolge letzten Beschichtungsschrittes $BS_n$ größer als die an dieser Stelle in den vorhergehende Beschichtungsschritte $BS_i$ applizierten Tropfengröße bzw. Linienbreiten sind und so groß gewählt werden, dass sich vorhandene Lücken in der Beschichtung restlos mit Beschichtungsstoff füllen. Im Folgenden werden bevorzugte Abarbeitungsstrategien beschrieben. Wesentlich ist, dass die Einzelstrukturen 20, die während eines Beschichtungsschrittes BS abgearbeitet werden, nur von einem einzigen Layer L stammen.

Bevorzugt wird ein Beschichtungskopf 5 aufgrund seiner begrenzten Breite in aneinander anknüpfenden Beschichtungsbahnen 6 über die Oberfläche 2 eines (3-dimensionalen) Objektes 1 geführt. Bevorzugt werden dabei alle Einzelstrukturen 20 eines Layers L, die eine jeweilige Beschichtungsbahnen 6 umfasst, aufgetragen. Die in einem Beschichtungsschritt BS auf die Oberfläche 2 aufgetragenen Einzelstrukturen 20 stammen aus einem einzigen Layer L.

Gemäß einer ersten Abarbeitungsstrategie werden zuerst alle Einzelstrukturen 20 eines Layers $L_i$ durch ein oder mehrere Beschichtungsschritte BS aufgetragen, sodann die der übrigen Layer. Dies bedeutet beispielsweise bei zwei Layern L (n=2), dass die Einzelstrukturen 20 beider Layer $L_1$ und $L_2$ nacheinander durch beispielsweise jeweils eine Vielzahl von Beschichtungsbahnen 6 vollständig auf die Oberfläche 2 aufgetragen werden.

Da die Beschichtung von Oberflächen im Drop-on-Demand Verfahren darauf basiert, dass benachbarte Beschichtungspunkte im noch feuchten Zustand miteinander in Kontakt kommen müssen, um durch das wechselseitige Ineinanderfließen (Verlauf) des Beschichtungsmittels eine zusammenhängende Schicht zu bilden, kann die soeben beschriebene Abarbeitungsstrategie nur angewendet werden, wenn sichergestellt ist, dass die im ersten Schritt aufgetragenen Einzelstrukturen 20 des ersten Layers $L_1$ noch genügend feucht sind. Dies bedeutet in aller Regel, dass hierfür der Beschichtungsbereich 3 genügend klein sein muss.

Bevorzugt findet somit ein Verlauf stets zwischen einer isolierten Einzelstruktur 20 eines ersten Layers $L_1$ und zweiten Layers $L_2$ statt und es besteht an jedem Punkt des Beschichtungsbereiches 3 die Anforderung, dass die Zeitspanne $t_{L2-L1}$, die zwischen dem Auftrag einer Einzelstruktur 20 des ersten Layers $L_1$ und einer zu dieser benachbarten Einzelstruktur 20 des zweiten Layers $L_1$ vergeht, kürzer sein muss als eine Offenzeit $t_0$ des Beschichtungsmittels auf der Oberfläche 2, oberhalb der kein ausreichender Verlauf mehr stattfinden kann. Bevorzugt wird man daher bemüht sein, eine Abarbeitungsstrategie so zu bestimmen, dass für jeden Punkt des Beschichtungsbereiches 3 gilt, dass

$$t_{L2\text{-}L1} < t_0$$

erfüllt ist, wobei $t_0$ in der Größenordnung von wenigen Sekunden oder Minuten liegt. Diese Anforderung führt zu weiteren Abarbeitungsstrategien:

Grundsätzlich wird ein Beschichtungsbereich 3 mittels eines Drop-on-Demand Beschichtungskopfes 5 in mindestens zwei Beschichtungsschritten BS beschichtet, welche komplementäre, bevorzugt über den Beschichtungsbereich 3 gleichmäßig verteilte Punktemuster PM enthalten, die jeweils voneinander isolierte Punkte oder Linien enthalten. Die Applikation der Beschichtungspunkte 8 in den einzelnen Beschichtungsschritten BS erfolgt seriell in bevorzugt parallel verlaufenden Beschichtungsbahnen 6, oder mit Hilfe von Beschichtungsstrategien wie weiter oben und in den Figuren 3 bis 10 beschrieben, beispielsweise geführt durch einen Mehrachs-Beschichtungsroboter 14.

Die weiteren Abarbeitungsstrategien sind besser für große Beschichtungsbereiche 3 geeignet und sind dadurch gekennzeichnet, dass in aufeinanderfolgenden Beschichtungsschritten BS Einzelstrukturen 20 im Wechsel aus unterschiedlichen Layern auf die Oberfläche 2 appliziert werden, wobei diese Einzelstrukturen 20 eine Teilmenge der Punktemuster PM des entsprechenden Layer L darstellen, dem sie entstammen.

Das Prinzip ist in Fig. 18 verdeutlicht. In dem Beispiel werden die Beschichtungspunkte 8 des Beschichtungsbereiches 3 auf zwei Layer $L_1$ und $L_2$ verteilt, bei den Einzelstrukturen 20 handelt es sich um Linien. Diese Wahl wird vorgenommen im Hinblick auf eine serielle Abarbeitung mittels vier Beschichtungsschritten $BS_1$, $BS_2$, $BS_3$ und $BS_4$, die beispielsweise Beschichtungsbahnen 6 unter Verwendung eines Beschichtungskopfes 5 entsprechen, wobei die Linien den Spuren 7 der Druckdüsen entsprechen. Es handelt sich hier um n=2 Layer, die in den Beschichtungsschritten aufgetragen Einzelstrukturen (Linien) entstammen abwechselnd aus Layer $L_1$ und Layer $L_2$:

| Beschichtungsschritt | Einzelstrukturen 20 aus Layer |
|:---:|:---:|
| $BS_1$ | $L_1$ |
| $BS_2$ | $L_2$ |
| $BS_3$ | $L_1$ |
| $BS_4$ | $L_2$ |

Bevorzugt wird bei diesem Verfahren in einem ersten Beschichtungsschritt $BS_1$ zumindest ein erster Ausschnitt $A_1$ des Beschichtungsbereiches 3 mit Einzelstrukturen 20 des ersten Layers $L_1$ beschichtet, die welche noch keine geschlossene Schicht bilden. In einem zweiten Beschichtungsschritt $BS_2$ wird mit Einzelstrukturen 20 des zweiten Layers $L_2$ der erste Ausschnitt $A_1$ und zusätzlich ein zweiter Ausschnitt $A_2$ beschichtet, wobei sich im Ausschnitt $A_1$ nun aus den Einzelstrukturen 20 aus $L_1$ und $L_2$ eine geschlossene Beschichtung ergibt und im Ausschnitt $A_2$ eine nicht geschlossene Schicht aus Einzelstrukturen 20 des Layers $L_2$. In einem dritten Beschichtungsschritt $BS_3$ wird mit Einzelstrukturen 20 wieder des ersten Layers $L_1$ der zweite Ausschnitt $A_2$ und zusätzlich ein dritter Ausschnitt $A_3$ beschichtet, wobei sich nun auch im Ausschnitt $A_2$ aus den Einzelstrukturen 20 aus $L_2$ und $L_1$ eine geschlossene Beschichtung ergibt und im Ausschnitt $A_3$ eine nicht geschlossene Schicht aus Einzelstrukturen 20 des Layers $L_1$. Diese abwechselnde Beschichtung mit Einzelstrukturen 20 aus $L_1$ und $L_2$ kann nun analog unendlich weitergeführt und so große Beschichtungsbereiche nach diesem Verfahren beschichtet werden. Dargestellt sind in Fig. 18 nur 4 Beschichtungsschritte BS. Im letzten (vierten) Beschichtungsschritt $BS_n$ ($BS_4$) wird mit Einzelstrukturen 20 des letzten resultierenden Layers $L_{1\ oder\ 2}$ (hier $L_2$) der vorletzte (hier dritte) Ausschnitt $A_{n-2}$ (hier $A_3$) beschichtet, sodass nun auch im letzten Ausschnitt $A_{n-2}$ aus den Einzelstrukturen 20 aus $L_1$ und $L_2$ eine geschlossene Beschichtung vorliegt.

Somit wird innerhalb eines sequenziellen Beschichtungsvorganges bestehend aus mehreren Beschichtungsschritten BS mindestens ein Beschichtungsschritt BS durchgeführt, mit dem in zwei Ausschnitten $A_i$ und $A_{i+1}$ regelmäßig angeordnete Einzelstrukturen 20 wie beispielsweise Punkte oder Linien, die durch Zwischenräume 21 unterbrochen sind, auf eine Oberfläche eines Objektes appliziert werden, dadurch gekennzeichnet, dass in dem ersten Ausschnitt $A_i$ durch die regelmäßig angeordneten Einzelstrukturen 20 eine zuvor applizierte unvollständige Schicht zu einer geschlossen Beschichtung vervollständigt wird und in einem zweiten Ausschnitt $A_{i+1}$ eine unvollständige Schicht aus Einzelstrukturen 20 aufgebracht wird, die komplementär angeordnete Zwischenräume 21 aufweist.

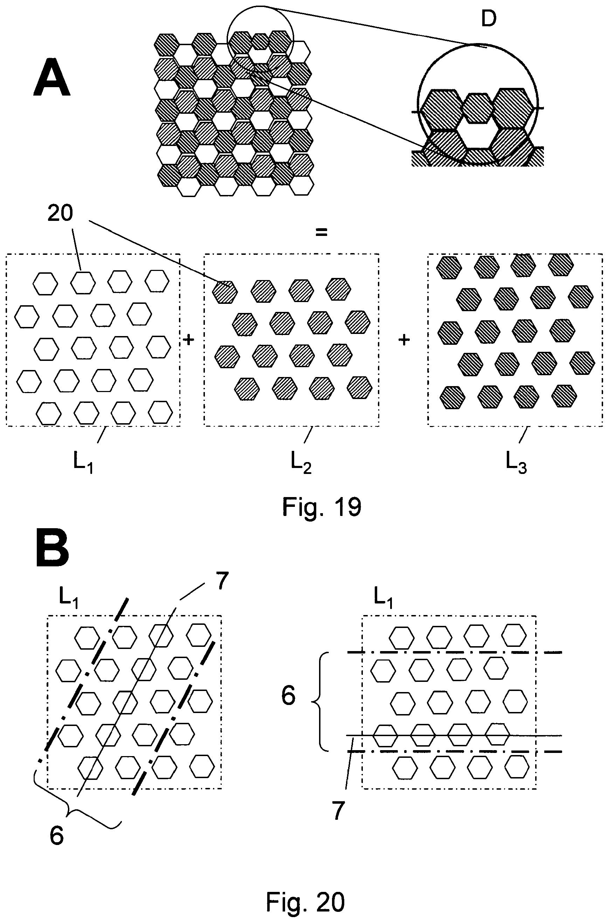

Fig. 19 beschreibt beispielhaft eine Aufteilung der Beschichtungspunkte 8 des Beschichtungsbereiches 3 auf drei Layer $L_1$, $L_2$ und $L_3$ in einem ersten Prozessschritt A. Wie in der Abbildung oben dargestellt ist hier die Punkteanordnung der Beschichtungspunkte 8 eine hexagonale Anordnung. Verdeutlich wird dies durch Darstellung der Punkte als Hexagone. Die Aufteilung der Beschichtungspunkte 8 auf die Layer 1 bis 3 wird anhand der Schraffuren verdeutlicht. Somit setzt sich die Gesamtschicht (oberes Bild) aus den Layern $L_1$, $L_2$ und $L_3$ zusammen, die darunter dargestellt sind.

Die Auftragung der Layer im zweiten Prozessschritt B läuft analog ab, wie es oben für den Fall mit zwei Layern beschrieben ist. In Fig. 20 sind beispielhaft und rein schematisch zwei mögliche Ausrichtungen, insbesondere Hauptrichtungen, für Beschichtungsbahnen 6 und jeweils eine zugehörige Spur 7 angegeben.

Während bei einer orthogonalen Anordnung der Beschichtungspunkte 8 in Zeilen und Spalten nur zwei Hauptrichtungen und zwei Diagonalen als Bewegungsrichtungen des Beschichtungskopfes 5 oder der Beschichtungsbahnen 6 in Frage kommen, sind es bei hexagonaler Anordnung drei Hauptrichtungen und drei Diagonalen, wobei hier als Diagonale stets die Winkelhalbierende zu zwei Hauptrichtungen bezeichnet wird.

Bei der Applikation von Einzelstrukturen 20 eines Layers L mit einer Beschichtungsbahn 6 kann diese grundsätzlich entlang einer beliebigen Hauptrichtung oder einer beliebigen Diagonalen ausgerichtet werden, was vom Düsenabstand des Beschichtungskopfes abhängt. So können beispielsweise im Falle der hexagonalen Punkteanordnung die Beschichtungsschritte BS bzw. Beschichtungsbahnen 6 aller Layer L entlang derselben Hauptrichtung oder Diagonale ausgerichtet werden, was den Vorteil besitzt, dass ein Beschichtungsbereich 3 grundsätzlich ausgehend von einer Seite mit langen und parallelen Beschichtungsbahnen 6 zur entgegengesetzten Seite hin beschichtet werden kann. Dabei kann mit Beschichtungsschritten BS gearbeitet werden, die sich der Einzelstrukturen 20 zirkulierend bei den Layern $L_1$ bis $L_3$ bedienen:

| Beschichtungsschritt | Einzelstrukturen 20 aus Layer |
|---|---|
| $BS_1$ | $L_1$ |
| $BS_2$ | $L_2$ |
| $BS_3$ | $L_3$ |
| $BS_4$ | $L_1$ |
| ... | ... |

In Fig. 19 ist ein eine Besonderheit eines hexagonalen Punktemusters dargestellten (Detail D): Je nach Winkellage einer Randkontur 4 können Beschichtungspunkte zweier Layer alternierend hervortreten oder zurückgesetzt sein. Um dennoch eine gerade Kante zu erhalten, wird vorgeschlagen, im zuletzt aufgetragenen Beschichtungsschritt $BS_n$ Beschichtungspunkte 8 reduzierter Größe zwischen diejenigen Beschichtungspunkte zu setzen, siehe Vergrößerung in Fig. 19, die aus der Randkontur 4 hervortreten.

Es sei angemerkt, dass die vorgeschlagenen Verfahren und die vorgeschlagenen Anordnungen von Druckpunkten 8 grundsätzlich nicht auf die hier aufgeführten Beispiele beschränkt sind, sondern allgemeine Lösungen darstellen, die miteinander verknüpft werden können. So können beispielsweise auch Punkteanordnungen nach den Figuren 3 bis 10 auf verschiedene Layer L verteilt werden und die Einzelstrukturen der Layer $L_i$, i=1 .. n, seriell oder Ausschnittweise zirkulierend durch Beschichtungsschritte $BS_j$, j=1 .. k, insbesondere Beschichtungsbahnen 6 auf eine zu beschichtende Oberfläche 2 aufgetragen werden. Hierbei kann die Punktegröße eines jeden zu applizierenden Beschichtungspunktes 8 variiert werden.

Wie oben beschrieben, besteht eine zusammenhängende Beschichtung im Beschichtungsbereich 3 im Wesentlichen indem Beschichtungspunkte 8 der Einzelstrukturen 20 eines ersten Layers $L_1$ mit Beschichtungspunkte 8 der Einzelstrukturen 20 eines zweiten Layers $L_2$ miteinander verlaufen und eine Schicht bilden. Da die Einzelstrukturen 20 im Wesentlichen über den ganzen Beschichtungsbereich 3 regelmäßig angeordnet, bzw. verteilt sind, ist die Art des Verlaufs der Beschichtungspunkte 8 über den Beschichtungsbereich 3 hinweg stets gleich und unabhängig von den Beschichtungsbahnen.

Im Gegensatz dazu wird heute nach dem Stand der Technik das Beschichtungsmittel stets vollflächig in parallelen Bahnen 6 aufgetragen. Dabei entstehen sichtbare Unterschiede im Verlauf zwischen Bereichen in der Mitte jeder Bahn 6, wo benachbarte Beschichtungspunkte 8 beinahe zeitgleich aufgetragen werden und optimal verlaufen können, und den Rändern 9 der Beschichtungsbahnen 6, wo benachbarte Bahnen, die mit einem größeren Zeitversatz von Sekunden bis Minuten aufgetragen werden, aneinander anknüpfen und aufgrund des Zeitversatzes ein schlechterer Verlauf zwischen den aneinander angrenzenden Spuren 7 der zwei benachbarten Beschichtungsbahnen 6 stattfindet.

**Liste der Bezugszeichen und Buchstabenkürzel:**

1      Objekt
2      Oberfläche
3      Beschichtungsbereich
4      Allgemeine Randkontur
5      Beschichtungskopf
6      Beschichtungsbahn

| 6a  | erste Beschichtungsbahn 6b zweite Beschichtungsbahn |
| --- | --- |
| 7   | Spur einer Druckdüse |
| 8   | Beschichtungspunkt |
| 9   | Rand einer Beschichtungsbahn |
| 10  | Überlappungsbereich |
| 11  | Rotationsachse |
| 12  | Feuerzeitpunkt |
| 14  | Beschichtungsroboter |
| 15  | 3D-Vermessungseinheit |
| 16  | DV-Anlage |
| 17  | Echtzeit Prozesssteuerung |
| 18  | Echtzeit Kopfsteuerung |
| 20  | Einzelstruktur |
| 21  | Zwischenräume, Lücken |

| HR (H1, H2, H4, H4) | Hauptrichtung eine Beschichtungsbahn |
| --- | --- |
| AK  | Anfangskontur |
| EK  | Endkontur |
| SKA | Seitenkante einer Beschichtungsbahn |
| AP  | Anfangs-Beschichtungspunkt |
| EP  | End-Beschichtungspunkt |
| BS  | Beschichtungsschritt |
| L   | Layer |
| A   | Ausschnitt |
| PM  | Punktemuster eines Layers |

## Patentansprüche

1.  Verfahren zur Applikation eines Beschichtungsmusters (3) aus einem Beschichtungsmittel auf eine ebene oder gekrümmte Oberfläche (2) eines Objektes (1) mit Hilfe eines Druckkopfes (5), welcher Beschichtungsmittel in Strahlen oder Tropfen aus mehreren Druckdüsen ausstößt, die in mindestens einer Reihe angeordnet sind, mit den Schritten:

    - Bewegen des Druckkopfes (5) im Abstand über die Oberfläche (2) mittels eines Beschichtungsroboters in mehreren Beschichtungsbahnen (6), welche mit den Druckdüsen korrespondierenden Spuren (7) von Beschichtungspunkten (8) enthalten, wobei die Bewegung schräg zu einer Anfangskontur (AK) und/oder einer Endkontur (EK) erfolgt,
    - dabei Ansteuerung der einzelnen Düsen des Druckkopfes so, dass Anfangs- Beschichtungspunkte (AP) der Spuren (7) die Anfangskontur (AK) tangential berühren oder zu der Anfangskontur (AK) einen konstanten Abstand aufweisen und dass zusätzlich End- Beschichtungspunkte (EP) der Spuren (7) die Endkontur (EK) tangential berühren oder zu der Endkontur (EK) einen konstanten Abstand aufweisen.

2.  Verfahren nach Anspruch 1, **dadurch gekennzeichnet, dass** die Ansteuerung der einzelnen Düsen des Druckkopfes (5) so erfolgt, dass die Spuren (7) zwischen den Anfangs-Beschichtungspunkten (AP) und End-Beschichtungspunkten (EP) weitere Beschichtungspunkte (8) enthalten, welche äquidistant angeordnet sind und dass die Abstände benachbarter Beschichtungspunkte (8) von mindestens zwei Spuren (7) nicht identisch sind.

3.  Verfahren nach Anspruch 2, **dadurch gekennzeichnet, dass** die Anzahl der weiteren Beschichtungspunkte (8) der Spuren zwischen den Anfangs-Beschichtungspunkten (AP) und End-Beschichtungspunkten (EP) zumindest in Teilbereichen so bestimmt wird, dass der Abstand der Beschichtungspunkte (8) der Spuren (7) untereinander in der Größenordnung des Abstandes benachbarter Spuren liegt.

4.  Verfahren nach einem der vorhergehenden Ansprüche, **dadurch gekennzeichnet, dass** zumindest eine Auswahl an Beschichtungspunkten (8) zusätzlich eine individuelle stochastische Verschiebung (Ad) entlang der Spur in positiver oder negativer Spurrichtung zu Nachbarpunkten aufweisen.

5.  Verfahren nach einem der vorhergehenden Ansprüche, **dadurch gekennzeichnet, dass** das Tropfenvolumen zumindest der weiteren Beschichtungspunkte (8) so angepasst wird, dass die Schichtdicke des Beschichtungsmittels im Mittel konstant ist.

6. Verfahren nach einem der vorhergehenden Ansprüche, **dadurch gekennzeichnet, dass** die Beschichtungsbahn (6) zumindest abschnittsweise eine Krümmung um die Senkrechte zur Oberfläche (2) aufweist.

7. Verfahren nach einem der vorhergehenden Ansprüche, **dadurch gekennzeichnet, dass** die Beschichtungsbahn (6) zumindest in einem Abschnitt in ihrer Breite verringert und diesem Bereich das Tropfenvolumen und/oder der Abstand der Beschichtungspunkte (8) zueinander angepasst ist.

8. Verfahren nach einem der vorhergehenden Ansprüche, **dadurch gekennzeichnet, dass** die Beschichtungsbahnen (6) überwiegend tangential ein oder mehrfach nach innen versetzt zu den geraden oder gekrümmten Rändern (4) des Beschichtungsmusters (3) verlaufen, wobei die Beschichtungsbahnen (6) lückenlos seitlich aneinander anschließen.

9. Verfahren nach Anspruch 7, **dadurch gekennzeichnet, dass** zumindest ein Teil des Beschichtungsmusters (3) Beschichtungsbahnen (6) enthält, die überwiegend parallel verlaufende, gerade oder gekrümmte Beschichtungsbahn-Stücke (6) aufweisen.

10. Verfahren nach einem der vorhergehenden Ansprüche, **dadurch gekennzeichnet, dass** einzelne Flächenelemente des Beschichtungsmusters (3) ein freies Punktemuster enthalten, erzeugt durch eine einzelne Druckdüse des Druckkopfes (5).

11. Verfahren nach Anspruch 9, **dadurch gekennzeichnet, dass** das freie Punktmuster Beschichtungspunkte (8) enthält, die sich in Ihrer Größe wesentlich von der mittleren Größe der Beschichtungspunkte (8) des Beschichtungsmusters (3) unterscheiden.

12. Verfahren nach einem der vorhergehenden Ansprüche, **dadurch gekennzeichnet, dass** der Anfangs-Beschichtungspunkt (AP) und End-Beschichtungspunkt (EP) einer Spur (7) identisch sind.

13. Verfahren nach einem der vorhergehenden Ansprüche, **dadurch gekennzeichnet, dass** in Bereichen des Beschichtungsmusters (3), die auf einer Oberfläche (2) des Objektes (1) gelegen sind, die zumindest in Teilen zu einer Achse (11) rotationssymmetrisch geformt ist, die Beschichtungsbahnen (6) so angeordnet sind, dass die Hauptrichtung (HR) zumindest in Bereichen in Rotationsrichtung tangential zur Oberfläche (2) verläuft.

14. Verfahren nach einem der vorhergehenden Ansprüche, **dadurch gekennzeichnet, dass** zumindest in Teilen des Beschichtungsmusters (3) die Druckpunkte (8) auf kreisförmigen Spuren (7) liegen, deren Rotationsachse (22) mit der Achse einer Druckdüse des Druckkopfes (5) zusammenfällt.

15. Verfahren nach einem der vorhergehenden Ansprüche, **dadurch gekennzeichnet, dass** sich zwei Beschichtungsbahnen (6a) und (6b) überlappen, wobei in einem Überlappungsbereich (10) durch Hilfskonturen definierte Flächenanteile zwischen der ersten Beschichtungsbahn (6a) und der zweiten Beschichtungsbahn (6b) aufgeteilt werden.

16. Verfahren nach einem der vorhergehenden Ansprüche, **dadurch gekennzeichnet, dass** sich zwei Beschichtungsbahnen (6a) und (6b) seitlich so überlappen, dass in dem Überlappungsbereich (10) zumindest eine Spur (7a) der ersten Beschichtungsbahn (6a) und eine Spur (7b) des zweiten Beschichtungsbahn (6b) im Wesentlichen deckungsgleich sind und Beschichtungspunkte (8) so unter den Spuren (7a) und (7b) aufgeteilt werden, dass die Spuren (7a) und (7b) in der Summe eine durchgehende Beschichtung bilden.

17. Verfahren nach einem der vorhergehenden Ansprüche, **dadurch gekennzeichnet, dass** in dem Überlappungsbereich (10) mindestens ein Druckpunkt (8) um mindestens 20% kleiner als dessen benachbarter Druckpunkt ist.

18. Verfahren nach Anspruch 16, **dadurch gekennzeichnet, dass** das Beschichtungsmittel lasierend ist und das Beschichtungsmuster (3) graphische Elemente enthält.

19. Verfahren nach einem der vorhergehenden Ansprüche, **dadurch gekennzeichnet, dass** Das Beschichtungsmuster (3) mindestens eine weitere Beschichtung aus einem weiteren Beschichtungsmittel enthält.

**20.** Verfahren nach einem der vorhergehenden Ansprüche, **gekennzeichnet durch** die folgenden Schritte:

- Durchführung einer Druckdaten-Generierung in einer DV-Anlage auf der Grundlage eines ersten Datensatzes, der die Oberfläche 2 des Objektes beschreibt und eines zweiten Datensatzes, der den Beschichtungsstruktur 3 beschreibt, mit den folgenden Unterschritten:
- Laden der Datensätze und Aufstellen von geometrischen Beziehungen;
- Generierung von Beschichtungsbahnen (Bi) und deren Spuren (sj) so, dass die Beschichtungsstruktur (3) durch Beschichtungsbahnen mindestens vollständig bedeckt ist, unter Berücksichtigung eines Abstandes (DD) zwischen Druckkopf (5) und Oberfläche (2);
- Bestimmen der Position der Anfangs-Beschichtungspunkte AP und/oder End-Beschichtungspunkte EP der Spuren (7) an Konturen (4), welche die Spuren (7) schräg kreuzen, so, dass diese die Konturen (4) tangential berühren und/oder dass diese einen konstanten Abstand zu den Schnittpunkten der Konturen (4) mit den Spuren (7) aufweisen;
- gegebenenfalls Auffüllen von weiteren Beschichtungspunkten (8) auf den Spuren (7) zwischen Anfangs-Beschichtungspunkt (AP) und End-Beschichtungspunkt (EP) und Bestimmen der Punkteabstände zwischen benachbarten Beschichtungspunkten (8) auf den Spuren (7);
- gegebenenfalls Korrektur der Tropfengröße der Beschichtungspunkte (8) so, dass eine Sollschichtdicke erreicht wird;
- Generierung eines Druckdatensatzes, welcher Beschichtungspunkt - spezifische Datenelemente enthält, die jeweils mindestens eine Zeit oder Orts-bezogene Information und eine Volumen-bezogene Information zu ein oder mehreren Beschichtungspunkten (8) enthalten;
- Generierung von Bewegungsdaten für die Steuerung eines Beschichtungsroboters unter Berücksichtigung des Abstandes (DD);
- Übertragen des Druckdatensatzes auf eine Echtzeit-Druckkopfsteuerung;
- Übertragen der Bewegungsdaten auf die Steuerung des Beschichtungsroboters;
- Durchführung der Beschichtung unter Zugrundelegung der Druckdaten und Bewegungsdaten.

**21.** Eine Vorrichtung zur Erzeugung einer Beschichtung auf einer ebenen oder gekrümmten Oberfläche (2) eines Objektes (1) in Form eines Beschichtungsmusters (3),

zusammengesetzt aus Beschichtungspunkten (8) eines Beschichtungsmittels, welche angeordnet sind entlang ein oder mehrerer Spuren (7) ein oder mehrerer Beschichtungsbahnen (6), **gekennzeichnet durch** eine Datenverarbeitungsanlage (16)

- zur Generierung eines Druckdatensatzes, welcher Beschichtungspunkt - spezifische Datenelemente enthält, die jeweils mindestens eine Zeit und/oder Orts bezogene Information und eine Volumen-bezogene Information zu ein oder mehreren Beschichtungspunkten (8) auf den jeweiligen Spuren (7) enthalten, wobei die
Generierung der zeit- und/oder Orts-bezogenen Information eine Bestimmung der Position der Anfangs-Beschichtungspunkte (AP) und End-Beschichtungspunkte (EP) der Spuren (7) an Konturen (4), welche die Spuren (7) schräg kreuzen, umfasst, so, dass diese die Konturen (4) tangential berühren und/oder dass diese einen konstanten Abstand zu den Schnittpunkten der Konturen (4) mit den Spuren (7) aufweisen, und
- zur Generierung der Bahn- und Steuerdaten des Beschichtungsprozesses,

eine Echtzeit-Prozesssteuerung (17),
ein Beschichtungsroboter (14) zur Bewegung des Druckkopfes in einem Abstand (DD) über die Oberfläche (2) des Objektes (1),
eine Echtzeit-Druckkopfsteuerung, die konfiguriert ist, mindestens zwei Druckdüsen des Druckkopfes asynchron anzusteuern,
einen Druckkopf (5) mit mindestens einer Reihe von Druckdüsen, die geeignet sind, das Beschichtungsmittel in diskreten Mengen kontaktfrei auf die Oberfläche zu applizieren.

**Claims**

**1.** Method for applying a coating pattern (3) of a coating agent to a flat or curved surface (2) of an object (1) with the aid of a print head (5), which ejects coating agent in jets or drops from a plurality of printing nozzles arranged in at least one row, comprising the steps of:

- moving the print head (5) at a distance over the surface (2) by means of a coating robot in a plurality of coating paths (6) which contain tracks (7) of coating points (8) corresponding to the printing nozzles, the movement taking place obliquely in relation to a starting contour (AK) and/or an end contour (EK),

- thereby activating the individual nozzles of the print head in such a way that the starting coating points (AP) of the tracks (7) touch the starting contour (AK) tangentially or are at a constant distance from the starting contour (AK) and that in addition the end coating points (EP) of the tracks (7) touch the end contour (EK) tangentially or are at a constant distance from the end contour (EK).

2. Method according to Claim 1, **characterized in that** the activation of the individual nozzles of the print head (5) takes place in such a way that the tracks (7) between the starting coating points (AP) and end coating points (EP) contain further coating points (8), which are arranged equidistantly, and that the distances between adjacent coating points (8) of at least two tracks (7) are not identical.

3. Method according to Claim 2, **characterized in that** the number of further coating points (8) of the tracks between the starting coating points (AP) and end coating points (EP) is determined, at least in subregions, in such a way that the distance between the coating points (8) of the tracks (7) is of the order of magnitude of the distance between adjacent tracks.

4. Method according to one of the preceding claims, **characterized in that** at least a selection of coating points (8) additionally have an individual stochastic offset (Ad) along the track in a positive or negative track direction in relation to adjacent points.

5. Method according to one of the preceding claims, **characterized in that** the volume of the drops, at least of the further coating points (8), is adapted in such a way that the coating thickness of the coating agent is constant on average.

6. Method according to one of the preceding claims, **characterized in that** the coating path (6) has, at least in one or more sections, a curvature about the perpendicular to the surface (2).

7. Method according to one of the preceding claims, **characterized in that** the coating path (6) is reduced in its width, at least in one section, and the volume of the drops and/or the distance of the coating points (8) from one another is adapted to this region.

8. Method according to one of the preceding claims, **characterized in that** the coating paths (6) run predominantly tangentially inwardly offset one or more times in relation to the straight or curved edges (4) of the coating pattern (3), the coating paths (6) laterally adjoining one another without gaps.

9. Method according to Claim 7, **characterized in that** at least a part of the coating pattern (3) contains coating paths (6) which have predominantly parallel, straight or curved coating path segments (6).

10. Method according to one of the preceding claims, **characterized in that** individual area elements of the coating pattern (3) contain a free dot pattern generated by a single print nozzle of the print head (5).

11. Method according to Claim 9, **characterized in that** the free dot pattern contains coating points (8) which differ substantially in their size from the average size of the coating points (8) of the coating pattern (3).

12. Method according to one of the preceding claims, **characterized in that** the starting coating point (AP) and the end coating point (EP) of a track (7) are identical.

13. Method according to one of the preceding claims, **characterized in that**, in regions of the coating pattern (3) which are located on a surface (2) of the object (1) that is rotationally symmetrically shaped at least in parts in relation to an axis (11), the coating paths (6) are arranged in such a way that the main direction (HR) runs tangentially to the surface (2) at least in regions in the direction of rotation.

14. Method according to one of the preceding claims, **characterized in that**, at least in parts of the coating pattern (3), the printing dots (8) lie on circular tracks (7), the axis of rotation (22) of which coincides with the axis of a print nozzle of the print head (5).

15. Method according to one of the preceding claims, **characterized in that** two coating paths (6a) and (6b) overlap, wherein, in an overlap region (10), area portions defined by auxiliary contours are divided between the first coating path (6a) and the second coating path (6b).

16. Method according to one of the preceding claims, **characterized in that** two coating paths (6a) and (6b) overlap laterally in such a way that, in the overlap region (10), at least one track (7a) of the first coating path (6a) and one track (7b) of the second coating path (6b) are substantially congruent and coating points (8) are divided among the tracks (7a) and (7b) in such a way that the tracks (7a) and (7b) together form a continuous coating.

17. Method according to one of the preceding claims, **characterized in that**, in the overlap region (10), at least one printing dot (8) is at least 20% smaller than its adjacent printing dot.

18. Method according to Claim 16, **characterized in that** the coating agent is translucent and the coating pattern (3) contains graphic elements.

19. Method according to one of the preceding claims, **characterized in that** the coating pattern (3) contains at least one further coating of a further coating agent.

20. Method according to one of the preceding claims, **characterized by** the following steps:

   - performing print data generation in a data processing system on the basis of a first data set describing the surface 2 of the object and a second data set describing the coating structure 3, with the following sub-steps:
   - loading the data sets and establishing geometric relationships;
   - generating coating paths (Bi) and their tracks (sj) in such a way that the coating structure (3) is at least completely covered by coating paths, taking into account a distance (DD) between the print head (5) and the surface (2) ;
   - determining the position of the starting coating points AP and/or end coating points EP of the tracks (7) on contours (4) which the tracks (7) cross obliquely, so that they touch the contours (4) tangentially and/or so that they are at a constant distance from the points of intersection of the contours (4) with the tracks (7);
   - if necessary, filling up further coating points (8) on the tracks (7) between the starting coating point (AP) and the end coating point (EP) and determining the point spacings between adjacent coating points (8) on the tracks (7);
   - if necessary, correcting the drop size of the coating points (8) so that a target layer thickness is achieved;
   - generating a print data set containing coating point-specific data elements, each containing at least one time- or location-related item of information and one volume-related item of information in relation to one or more coating points (8);
   - generating motion data for the control of a coating robot, taking into account the distance (DD);
   - transferring the print data set to a real-time print head control;
   - transferring the motion data to the coating robot controller;
   - performing the coating on the basis of the print data and motion data.

21. Device for generating a coating on a flat or curved surface (2) of an object (1) in the form of a coating pattern (3),

   assembled of coating points (8) of a coating agent arranged along one or more tracks (7) of one or more coating paths (6), **characterized by**
   a data processing system (16)

      - for generating a print data set containing coating point-specific data elements, each containing at least one time- or location-related item of information and one volume-related item of information in relation to one or more coating points (8) on the respective tracks (7); wherein the generation of the time- and/or location-specific item of information comprises determination of the position of the starting coating points (AP) and end coating points (EP) of the tracks (7) on contours (4) which the tracks (7) cross obliquely, so that they touch the contours (4) tangentially and/or so that they are at a constant distance from the points of intersection of the contours (4) with the tracks (7), and

      - for generating the path and control data of the coating process,

      a real-time process controller (17)

a coating robot (14) for moving the print head at a distance (DD) over the surface (2) of the object (1),
a real-time print head controller configured to activate at least two print nozzles of the print head asynchronously,
a print head (5) with at least one row of print nozzles suitable for contactless application of the coating agent to the surface in discrete amounts.

**Revendications**

1. Procédé d'application d'un motif de revêtement (3) à partir d'un agent de revêtement sur une surface plane ou incurvée (2) d'un objet (1) à l'aide d'une tête d'impression (5) qui éjecte l'agent de revêtement par jets ou gouttes de plusieurs buses d'impression qui sont disposées en au moins une rangée, ledit procédé comprenant les étapes suivantes :

   - déplacer la tête d'impression (5) à distance au-dessus de la surface (2) au moyen d'un robot de revêtement suivant plusieurs bandes de revêtement (6) qui contiennent des pistes (7), correspondant aux buses d'impression, de points de revêtement (8), le déplacement étant effectué obliquement par rapport à un contour initial (AK) et/ou un contour final (EK),
   - commander alors les buses individuelles de la tête d'impression de telle sorte que des points de revêtement initiaux (AP) des pistes (7) touchent tangentiellement le contour initial (AK) ou soient à une distance constante du contour initial (AK) et qu'en outre des points de revêtement d'extrémité (EP) des pistes (7) touchent tangentiellement le contour final (EK) ou soient à une distance constante du contour final (EK).

2. Procédé selon la revendication 1, **caractérisé en ce que** la commande des buses individuelles de la tête d'impression (5) est effectuée de telle sorte que les pistes (7) entre les points de revêtement initial (AP) et les points de revêtement final (EP) contiennent d'autres points de revêtement (8) qui sont disposés à égale distance et que les distances entre des points de revêtement (8) adjacents d'au moins deux pistes (7) ne soient pas identiques.

3. Procédé selon la revendication 2, **caractérisé en ce que** le nombre d'autres points de revêtement (8) des pistes entre les points de revêtement initiaux (AP) et les points de revêtement finaux (EP) est déterminé au moins par zones partielles de telle sorte que la distance entre les points de revêtement (8) des pistes (7) entre eux est de l'ordre de grandeur de la distance entre des pistes adjacentes.

4. Procédé selon l'une des revendications précédentes, **caractérisé en ce qu'**au moins une sélection de points de revêtement (8) présente en outre un déplacement stochastique individuel (Ad) le long de la piste dans le sens positif ou négatif de la piste vers des points voisins.

5. Procédé selon l'une des revendications précédentes, **caractérisé en ce que** le volume des gouttes au moins des autres points de revêtement (8) est adapté de manière à ce que l'épaisseur de couche de l'agent de revêtement soit en moyenne constante.

6. Procédé selon l'une des revendications précédentes, **caractérisé en ce que** la bande de revêtement (6) présente, au moins par portions, une incurvation autour de la perpendiculaire à la surface (2) .

7. Procédé selon l'une des revendications précédentes, **caractérisé en ce que** la bande de revêtement (6) est réduite en largeur au moins dans une portion et le volume des gouttes et/ou la distance entre les points de revêtement (8) sont adaptés à cette zone.

8. Procédé selon l'une des revendications précédentes, **caractérisé en ce que** les bandes de revêtement (6) s'étendent majoritairement tangentiellement aux bords droits ou incurvés (4) du motif de revêtement (3) en étant une ou plusieurs fois décalées vers l'intérieur, les bandes de revêtement (6) étant adjacentes latéralement les aux autres sans espaces.

9. Procédé selon la revendication 7, **caractérisé en ce qu'**au moins une partie du motif de revêtement (3) contient des bandes de revêtement (6) qui comportent principalement des morceaux de bande de revêtement (6), droits ou incurvés, qui s'étendent en parallèle.

10. Procédé selon l'une des revendications précédentes, **caractérisé en ce que** les éléments de surface individuels du motif de revêtement (3) contiennent un motif de points libres, généré par une buse d'impression individuelle de la tête d'impression (5) .

11. Procédé selon la revendication 9, **caractérisé en ce que** le motif de points libres contient des points de revêtement (8) qui se distinguent par leur taille sensiblement de la taille moyenne des points de revêtement (8) du motif de revêtement (3).

12. Procédé selon l'une des revendications précédentes, **caractérisé en ce que** le point de revêtement initial (AP) et le point de revêtement final (EP) d'une piste (7) sont identiques.

13. Procédé selon l'une des revendications précédentes, **caractérisé en ce que**, dans les zones du motif de revêtement (3) qui sont placées sur une surface (2) de l'objet (1) qui est conformée au moins dans certaines parties à symétrie de révolution par rapport à un axe (11), les pistes de revêtement (6) sont disposées de telle sorte que la direction principale (HR) s'étende tangentiellement à la surface (2) au moins dans des zones dans le sens de rotation.

14. Procédé selon l'une des revendications précédentes, **caractérisé en ce qu'**au moins dans certaines parties du motif de revêtement (3), les points d'impression (8) sont situés sur des pistes circulaires (7) dont l'axe de rotation (22) coïncide avec l'axe d'une buse d'impression de la tête d'impression (5).

15. Procédé selon l'une des revendications précédentes, **caractérisé en ce que** deux bandes de revêtement (6a) et (6b) se chevauchent, des parties de surface, définies par des contours auxiliaires, étant réparties dans une zone de chevauchement (10) entre la première bande de revêtement (6a) et la deuxième bande de revêtement (6b).

16. Procédé selon l'une des revendications précédentes, **caractérisé en ce que** deux bandes de revêtement (6a) et (6b) se chevauchent latéralement de telle sorte que, dans la zone de chevauchement (10), au moins une piste (7a) de la première la bande de revêtement (6a) et une piste (7b) de la deuxième bande de revêtement (6b) sont sensiblement congruentes et des points de revêtement (8) sont répartis entre les pistes (7a) et (7b) de telle sorte que les pistes (7a) et (7b) forment au total un revêtement continu.

17. Procédé selon l'une des revendications précédentes, **caractérisé en ce que**, dans la zone de chevauchement (10), au moins un point d'impression (8) est plus petit d'au moins 20 % que son point d'impression adjacent.

18. Procédé selon la revendication 16, **caractérisé en ce que** l'agent de revêtement est translucide et le motif de revêtement (3) contient des éléments graphiques.

19. Procédé selon l'une des revendications précédentes, **caractérisé en ce que** le motif de revêtement (3) contient au moins un autre revêtement réalisé à partir d'un autre agent de revêtement.

20. Procédé selon l'une des revendications précédentes, **caractérisé par** les étapes suivantes :

   - effectuer une génération de données d'impression dans un système de traitement de données sur la base d'un premier ensemble de données qui décrit la surface 2 de l'objet et d'un deuxième ensemble de données qui décrit la structure de revêtement 3, ledit procédé comprenant les sous-étapes suivantes :
   - charger des ensembles de données et établir des relations géométriques ;
   - générer des bandes de revêtement (Bi) et leurs pistes (sj) de telle sorte que la structure de revêtement (3) soit au moins entièrement recouverte par des bandes de revêtement, avec prise en compte d'une distance (DD) entre la tête d'impression (5) et la surface (2) ;
   - déterminer la position des points de revêtement initiaux AP et/ou des points de revêtement finaux EP des pistes (7) au niveau de contours (4) qui coupent les pistes (7) obliquement de sorte que celles-ci touchent les contours (4) tangentiellement et/ou que celles-ci soient à une distance constante des points d'intersection des contours (4) avec les pistes (7) ;
   - remplir éventuellement d'autres points de revêtement (8) sur les pistes (7) entre le point de revêtement initial (AP) et le point de revêtement final (EP) et déterminer les distances entre des points de revêtement (8) adjacents sur les pistes (7) ;
   - corriger éventuellement la taille des gouttes des points de revêtement (8) afin d'atteindre une épaisseur de couche cible ;
   - générer un ensemble de données d'impression qui contient des éléments de données qui sont spécifiques au point de revêtement et qui contiennent chacun au moins une information relative au temps ou à l'emplacement et une information relative au volume qui concernent un ou plusieurs points de revêtement (8) ;
- générer des données de déplacement destinées à commander un robot de revêtement avec prise en compte de la distance (DD) ;
- transmettre l'ensemble des données d'impression à une commande de tête d'impression en temps réel ;
- transmettre des données de mouvement à la commande du robot de revêtement ;
- réaliser le revêtement sur la base des données d'impression et des données de mouvement.

21. Dispositif de génération d'un revêtement sur une surface plane ou incurvée (2) d'un objet (1) sous la forme d'un motif de revêtement (3),

ledit revêtement comprenant des points de revêtement (8) d'un agent de revêtement qui sont disposés le long d'une ou plusieurs pistes (7) d'une ou plusieurs bandes de revêtement (6), **caractérisé par**
un système de traitement de données (16)

- pour générer un ensemble de données d'impression qui contient des éléments de données qui sont spécifiques au point de revêtement et qui contiennent chacun au moins une information relative au temps et/ou à l'emplacement et une information relative au volume qui concernent un ou plusieurs points de revêtement (8) sur les pistes respectives (7), la génération de l'information relative au temps et/ou à l'emplacement comprenant une détermination de la position des points de revêtement initiaux (AP) et des points de revêtement finaux (EP) des pistes (7) au niveau des contours (4) qui coupent les pistes (7) obliquement de telle sorte que celles-ci touchent les contours (4) tangentiellement et/ou que celles-ci soient à une distance constante des points d'intersection des contours (4) avec les pistes (7), et
- pour générer les données de bande et de commande du processus de revêtement,

une commande de processus en temps réel (17),
un robot de revêtement (14) destiné à déplacer la tête d'impression à une distance (DD) sur la surface (2) de l'objet (1),
une commande de tête d'impression en temps réel qui est conçue pour commander de manière asynchrone au moins deux buses d'impression de la tête d'impression,
une tête d'impression (5) comportant au moins une rangée de buses d'impression qui sont appropriées pour appliquer sans contact sur la surface l'agent de revêtement dans des quantités discrètes.

Fig. 1

Fig. 2, Prior Art

Fig. 3a

Fig. 3b

6a     6b

6a

$S_{i,j}$    $d_{i,j,k}$

9

4a

6b

$d_{1,1,k}$

9

AP
(EP)

Fig. 4, Prior Art      Fig. 5

6, $B_i$    7, $s_{i,j}$    9

3

$d_{i,j,k}$

5

Fig. 6

8
C
3
B
A
D

Feature-basierte
Printstrategie

Fig. 7a

Fig. 7b

B4, H4

H2

6b

Detail A

6a

H1

Fig. 8

Fig. 9

Fig. 10a

Fig. 10b

Fig. 11

Fig. 12

Fig. 13

Fig. 14

Haeder

Neue Bahn i=1

Trigger 1

Bahnsegment Typ 3

| | | | | | |
|---|---|---|---|---|---|
| $s_1$ $n_{11}$ | $\Theta_{111}, V_{111}$ | $\Theta_{112}, V_{112}$ | ... | $\Theta_{11n}, V_{11n}$ | |
| $s_2$ $n_{12}$ | $\Theta_{121}, V_{121}$ | $\Theta_{123}, V_{123}$ | ... | $\Theta_{12n}, V_{12n}$ | |
| $s_3$ $n_{13}$ | $\Theta_{131}, V_{131}$ | $\Theta_{132}, V_{132}$ | $\Theta_{133}, V_{133}$ | ... | $\Theta_{13n}, V_{13n}$ |

...

| $s_b$ $n_{1b}$ | $\Theta_{1b1}, V_{1b1}$ | $\Theta_{1b2}, V_{1b2}$ | $\Theta_{1b3}, V_{1b3}$ | ... | $\Theta_{1bn}, V_{1bn}$ |

Bahnsegment Typ 1

| $n_2$ | $\Theta_2, V_2$ |
|---|---|

Bahnsegment Typ 2

| $s_1$ $n_{21}$ | $\Theta_{21}, V_{21}$ |
|---|---|
| $s_2$ $n_{22}$ | $\Theta_{22}, V_{22}$ |
| $s_3$ $n_{23}$ | $\Theta_{13}, V_{13}$ |

...

| $s_b$ $n_{2b}$ | $\Theta_{2b}, V_{2b}$ |
|---|---|

Segmente: $\xi = 1 .. m$
Spuren pro Bahn: $j = 1 .. b$
Punkte pro Spur: $k = 1 .. n_{ij}$

Druckstatus

Neue Bahn i=2

...

EOF

Fig. 15

Start
Druckbild-Generierung

Laden des ersten und
zweiten Datensatzes

Vorschub Druckkopf

Druckkopf-
Druckbreite

Generierung der
Druckbahnen $B_i$ i = 1 .. m

Geschwindigkeiten $v_j(\xi)$ und
Krümmungen $\varphi_j(\xi)$ für
alle Spuren $s_j$ berechnen

$AP_i$ und $EP_i$
der einzelnen Spuren $s_j$
aller Druckbahnen Bi bestimmen

Länge $L_j$ der Spuren $s_j$
aller Druckbanhnen i bestimmen

Punkteabstand $d_j$ für Spuren $s_j$
aller Druckbanhnen i bestimmen

Für Spuren $s_j$ aller Druckbanhnen Bi:
Umrechnen der Punkteabstände $d_j$
in zeitliche Feuer-Abstände $t_j(\xi)$

ggf. Tropfengrößen $V_k(\xi)$ für Spuren $s_j$
aller Druckbanhnen Bi korrigieren

Generierung eines Druck-
Datensatzes mit (absoluten oder
inkrementellen) zeitlichen Steuerdaten $\Theta_j(\xi)$
und Tropfendaten $V_k(\xi)$ für alle Spuren $s_j$
der Bahnen i = 1 .. n

Ende
Druckbild-Generierung

Fig. 16

Fig. 17

**B**

BS₁ BS₃ 20 21 BS₂ BS₄

A₁ A₂ A₃       A₁ A₂ A₃

L₁          L₂

2    4

3

1

Fig. 18

A

D

20

=

+

+

$L_1$

$L_2$

$L_3$

Fig. 19

B

$L_1$

7

6

$L_1$

6

7

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3208746 A1
- DE 102014017707 A1

- DE 102014
- DE 102012005650